# EUROPÄISCHE PATENTSCHRIFT

(11) **EP 1 875 119 B1**
(45) Veröffentlichungstag und Bekanntmachung des Hinweises auf die Patenterteilung: **19.08.2009**
(21) Anmeldenummer: 06724617.3
(22) Anmeldetag: 27.04.2006
(51) Int. Cl.: F16L 37/48, E03C 1/086, F16L 37/04

(54) **ADAPTER-KUPPLUNG**
ADAPTER COUPLING
RACCORD ADAPTATEUR

(30) Priorität: 29.04.2005 DE 102005020111
(43) Veröffentlichungstag der Anmeldung: 09.01.2008
(73) Patentinhaber: Freiseisen, Christian, 82538 Geretsried (DE)
(72) Erfinder: FREISEISEN, Thomas, 82549 Königsdorf (DE)
(74) Vertreter: Köster, Hajo
(86) Internationale Anmeldenummer: PCT/EP2006/003938
(87) Internationale Veröffentlichungsnummer: WO 2006/117134

(56) Entgegenhaltungen:
- WO-A-00/08371
- WO-A-01/38776
- DE-A1- 10 157 445

## Beschreibung

Die Erfindung betrifft eine Adapterkupplung zum lösbaren Aufschieben auf das wasserabgebende Ende eines Wasserauslaufes, insbesondere eines Wasserhahnes, unter Herstellung einer wasserdichten Verbindung
mit einer in etwa haubenförmigen oder glockenförmigen Muffe, die in ihrem Muffeninnenraum das wasserabgebende Ende aufnehmen kann und mit einem Wasserauslass versehen ist,
mit einer eine zentrale Öffnung aufweisenden elastischen Dichtung, durch deren zentrale Öffnung das wasserabgebende Ende des Wasserauslaufes in den Muffeninnenraum eingeführt werden kann, die durch das eingeführte Ende des Wasserauslaufes aufgeweitet werden und sich an die Außenmantelflache des wasserabgebendes Endes dichtend anlegen kann und die den Muffeninnenraum nach außen fluiddicht abdichtet,
und mit einer Stützeinheit, die einen aufweitbaren Trichter bildet, die axial außen von der Dichtung angeordnet ist sowie diese Dichtung stützt.

Zur Herstellung einer Verbindung zwischen einem Wasserhahn und einem Schlauch ist es bekannt, den Wasserhahn mit einem Ansatzstück auszustatten, welches ein normiertes Gewinde besitzt, das auf das ebenfalls normierte Gewinde des wasserabgebenden Endes des Wasserauslaufes von Wasserhähnen aufschraubbar ist. Auf dieses Ansatzstück, welches eine Art Spitzende darstellt, kann eine mit dem Schlauch verbundene Muffe unter Herstellung einer druckdichten und fluiddichten Verbindung aufgeschoben werden. Um eine derartige Verbindung herzustellen, muss jedoch der Wasserhahn mit dem speziellen gestalteten Ansatzstück ausgestattet werden.

Um nun einen beliebig gestalteten Wasserhahn, der somit nicht mit einem speziellen Ansatzstück versehen ist, mit einem Schlauch zu verbinden, lehrt die US-A 3 515 413 eine Kupplung, die mit einer Muffe ausgestattet ist, die eine wasserhahnseitige Dichtung bzw. Abdichtmanschette besitzt, welche sich von einem ringförmigen Grundkörper in Einstiegrichtung des Wasserauslaufes des Wasserhahnes erstreckt und die zudem zur Mitte hin geneigt ist. Diese bekannte Kupplung kann auf ein Wasserrohr aufgeschoben werden, das dabei die Abdichtmanschette aufweitet. Ähnliche Vorrichtungen sind beschrieben in den US-A 3 844 586, US-A 5 743 570, US-A 2 688 499 und US-A 2 094 889 sowie dem DE-GM 1 826 455. Diesen Kupplungen ist gemeinsam, dass sie nicht in der Lage sind, sich an den Wasserauslauf eines Wasserhahnes abdichtend anzulegen und/oder den herrschenden Wasserdrucken nicht standhalten.

Eine weitere derartige Kupplung bzw. Adapter-Kupplung, die sich auf beliebige Wasserhähne aufschieben lässt, ist beschrieben in der PCT/EP99/05680 (WO 00/08371). Bei einer der dort beschriebenen Ausführungsformen dieser Adapter-Kupplung wird die Abdichtmanschette durch eine Verstärkungseinheit gestützt, die sich zwischen zwei Lagen dieser Abdichtmanschette befindet bzw. in diese quasi eingebettet ist.

Eine verbesserte Dichtungseinheit für eine derartige Adapter-Kupplung ist in der PCT/EP00/11642 (WO 01/38776) offenbart. Diese Dichtungseinheit weist nicht nur eine Verstärkungseinheit der beschriebenen Art auf, sondern ist auch mit einem Gleittrichter versehen, der außen von der Abdichtmanschette bzw. der Dichtung angeordnet ist und somit zu dem wasserabgebenden Ende eines Wasserhahnes etc. zeigt. Dieser Gleittrichter besteht aus einem radial außen umlaufenden, durchgehenden Ring, von dem sich mehrere, daran gelenkig verbundene Zungen nach radial innen zur zentralen Öffnung der Abdichtmanschette erstrecken.

Eine weiterhin verbesserte Adapter-Kupplung der hier in Rede stehenden Art gemäß dem Oberbegriff des Anspruch 1 ist beschrieben in der DE-A 101 57 445.2. Letztere Kupplung ist mit einer Trichtereinheit versehen, die aus mehreren separaten, die Dichtung stützenden, länglichen Verstärkungsrippen gebildet wird. Diese Verstärkungsrippen sind nebeneinander auf dem Umfang des Muffenrandes derart verteilt angeordnet, dass sie zusammen die Trichtereinheit bilden.

Zur Herstellung letzterer Adapter-Kupplung ist es erforderlich, eine Vielzahl von Einzelteilen zusammenzufügen.

Eine gattungsgemäße Adapter-Kupplung ist ferner in der nicht vorveröffentlichten PCT/EP2004/011529 WO-A-2005/047754 beschrieben.

Ausgehend von diesem Stand der Technik ist es Aufgabe der vorliegenden Erfindung, eine einfacher aufgebaute, leicht zusammensetzbare und funktionssicherere Adapter-Kupplung bereitzustellen. Gelöst wird diese Aufgabe durch die Adapter-Kupplung gemäß dem Anspruch 1. Vorteilhafte Ausführungsformen der Erfindung sind in den abhängigen Ansprüchen definiert.

Bei der erfindungsgemäßen Adapter-Kupplung ist die Stützeinheit aus nur zwei Elementen aufgebaut, nämlich aus einer ersten Ringscheibenverstärkung und einer zweiten Ringscheibenverstärkung. Beide Ringscheibenverstärkungen besitzen einen äußeren, umlaufenden und durchgehenden Ringbereich, von dem sich mehrere, gleichmäßig auf dem Umfang verteilte, an ihrer Basis an dem Ringbereich angelenkte Zungen nach radial innen sowie schräg zur Längsachse erstrecken. Diese Zungen bilden zusammen den aufweitbaren Trichter. Mit anderen Worten, die eine Trichterfunktion wahrnehmende Stützeinheit verjüngt sich von der Seite her betrachtet nach innen zum Muffeninnenraum hin und zentriert somit das wasserabgebende Ende des Wasserauslaufes, wenn dieses Ende in den Muffeninnenraum eingeführt wird.

Die Zungen der ersten Ringscheibenverstärkung definieren im nicht aufgeweiteten Zustand der Dichtung zwischen sich einen Freiraum bzw. lassen einen Raum frei, in dem die Zungen der zweiten Ringscheibenverstärkung zu liegen kommen und diesen Raum zumindest teilweise ausfüllen. Auch die Zungen der zweiten Ringscheibenverstärkung definieren im nicht aufgeweiteten Zustand der Dichtung zwischen sich einen Freiraum bzw. lassen einen Raum frei, in dem die Zungen der ersten Ringscheibenverstärkung zu liegen kommen und diesen Raum zumindest teilweise ausfüllen.

Die Ringscheibenverstärkungen sind von der Größe und Form her somit derart ausgestaltet, dass, bezogen auf den nicht aufgeweiteten Zustand, die Zungen der ersten Ringscheibenverstärkung in dem Freiraum zwischen den Zungen der zweiten Ringscheibenverstärkung zuliegen kommen und diesen Freiraum zumindest im wesentlichen ausfüllen. Dies gilt auch vice versa.

Die Zungen beider Ringscheibenverstärkungen bilden zusammen eine Art flachen Ring. Die Zungen beider Ringscheibenverstärkungen liegen dabei insbesondere in einer Fläche, auf der die Dichtung abgestützt wird.

Nach einer bevorzugten Ausführungsform sind die Zungen und Freiräume einer Ringscheibenverstärkungen in etwa gleich. Weiterhin bevorzugt entspricht die Zahl der Zungen einer Ringscheibenverstärkung der Zahl der dazwischenliegenden Freiräume. Ferner entspricht vorzugsweise die Zahl der Zungen der ersten Ringscheibenverstärkung der Zahl der Freiräume der zweiten Ringscheibenverstärkung und vice versa.

Weiterhin bevorzugt sind die Zungen in axialer Aufsicht trapezförmig ausgestaltet, wobei die radial verlaufenden Seitenränder der Zungen die Seitenkanten des Trapezes bilden. Die parallelen Kanten des Trapezes werden durch die Basis und das radial innenliegende Ende der Zungen gebildet, wobei die Basis länger ist als das radial innenliegende Ende. Mit anderen Worten, die Zungen verjüngen sich in Aufsicht von der Basis ausgehend nach radial innen. Gleiches gilt dann auch für die zwischen den Zungen liegenden Freiräume.

Beim Einschieben des wasserabgebenden Endes in den Muffeninnenraum weitet sich der durch die Zungen gebildete Trichter auf, indem die Zungen um ihre Basis nach innen in den Muffeninnenraum weggeschwenkt werden. Dadurch vergrößert sich natürlich auch der Freiraum zwischen den Zungen. Es entstehen dabei Bereiche, in denen die Dichtung nicht mehr von den Zungen der Stützeinheit abgestützt wird.

Um letztere Bereiche zu überdecken, sind die Zungen der zweiten Ringscheibenverstärkung an ihren beiden sich radial erstreckenden Seitenrändern mit jeweils einem Seitenflügel ausgestattet. Die Breite dieser Seitenflügel nimmt vorzugsweise von radial außen nach radial innen zu. Zwischen den freien Seitenrändern benachbarter Zungen verbleibt ein sich in radialer Richtung erstreckender Spalt, auf den nachstehend noch näher eingegangen wird.

Diese Seitenflügel sind an den Zungen der zweiten Ringscheibenverstärkung zweckmäßigerweise in ihrem axial innenliegenden und somit zur Dichtung zeigenden Bereich angeordnet. Sind die beiden Ringscheibenverstärkungen zusammengesetzt, dann wechseln sich die Zungen der ersten Ringscheibenverstärkung mit den Zungen der zweiten Ringscheibenverstärkung ab. Die Flügel der Zungen der zweiten Ringscheibenverstärkung liegen axial innen auf den axial innenliegenden Oberseiten der Zungen der axial äußeren, ersten Ringscheibenverstärkung auf und stützen sich darauf ab. Die Zungen der ersten Ringscheibenverstärkung besitzen einen sich radial erstreckenden, mittigen Steg, der den genannten Spalt der Zungen der zweiten Ringscheibenverstärkung ausfüllt bzw. in diesem zu liegen kommt.

Beim Aufweiten des Trichters vergrößert sich natürlich auch der Raum zwischen den benachbarten Zungen der ersten und zweiten Ringscheibenverstärkung. Dieser zusätzliche Raum wird jedoch durch die

Seitenflügel der Zungen der zweiten Ringscheibenverstärkung abgedeckt, die auch noch im aufgeweiteten Zustand auf den Zungen der ersten Ringscheibenverstärkung aufliegen. Somit kann die durch die Stützeinheit abgestützte Dichtung selbst bei Beaufschlagung mit hohem Wasserdruck nicht zwischen den Zungen der ersten und zweiten Ringscheibenverstärkung hindurchgedrückt werden. Die Dichtung wird somit auch im aufgeweiteten Zustand vollflächig unterstützt.

Bedingt dadurch, dass die Zungen der zweiten Ringscheibenverstärkung beidseits jeweils einen Seitenflügel haben, ist es zudem möglich, die beiden Ringscheibenverstärkungen auf einfache Weise zusammenzusetzen. Sie müssen lediglich aufeinander gelegt werden.

Die Zungen der zweiten Ringscheibenverstärkung besitzen vorzugsweise in der Nähe ihres radial inneren Endes einen sich in etwa nach axial innen sowie in etwa in axialer Richtung erstreckenden Nippel der in eine Ausnehmung eingreift, die in einen bügelförmig gebogenen sowie wippenartigen Aufsatz ausgenommen ist. Der Nippel greift dabei derart mit Spiel in diese Ausnehmung ein, dass der Aufsatz eine wippartige Bewegung ausführen kann.

Die Ausnehmung befindet sich vorzugsweise im zentralen Bereich der Aufsätze, die beiderseits dieser Ausnehmung jeweils eine Flanke besitzen. Eine dieser Flanken, nämlich die radial äußere, greift in eine dazugehörige, gegenüberliegende Tasche der Dichtung ein.

Die Dichtung besitzt vorzugsweise in etwa die Form eines runden Tellers. Im Zentrum des Tellerbodens ist die zentrale Öffnung ausgebildet, welche vorzugsweise von einem Dichtring eingefasst ist. Die Seitenwand des Tellers verläuft schräg zur Längsachse und kommt in Anlage an die Zungen bzw. die beschriebenen Seitenflügel. Der Tellerrand kann zwischen dem Rand der Muffe und dem Ringdeckel abdichtend verpresst werden.

Die erfindungsgemäße Adapter-Kupplung wird im folgenden anhand der nachstehenden Zeichnungen näher erläutert, welche eine bevorzugte Ausführungsform wiedergeben. Von den Figuren zeigen:
- Figur 1: eine Seitenansicht einer erfindungsgemäßen Adapter-Kupplung, die auf das wasserabgebende Ende eines Wasserauslaufes eines Wasserhahnes aufgeschoben ist,
- Figuren 2 und 3: eine Explosionsdarstellung der in der Figur 1 gezeigten Adapter-Kupplung,
- Figur 4: eine haubenförmige oder glockenförmige Muffe in Seitenansicht,
- Figur 5: eine Schnittansicht der in der Figur 4 gezeigten Muffe entlang der Linie A-A,
- Figur 6: eine Aufsicht in die in der Figur 4 gezeigten Muffe von unten.
- Figur 7: eine Seitenansicht eines auf die Muffe der Adapter-Kupplung aufschraubbaren Ringdeckels,
- Figur 8: eine Schnittansicht durch den in der Figur 7 gezeigten Ringdeckel,
- Figur 9: eine perspektivische Ansicht des in den Figuren 7 und 8 gezeigten Ringdeckels nach "innen" hinein,
- Figur 10: eine perspektivische Ansicht des Ringdeckels aus Figur 7 von außen,

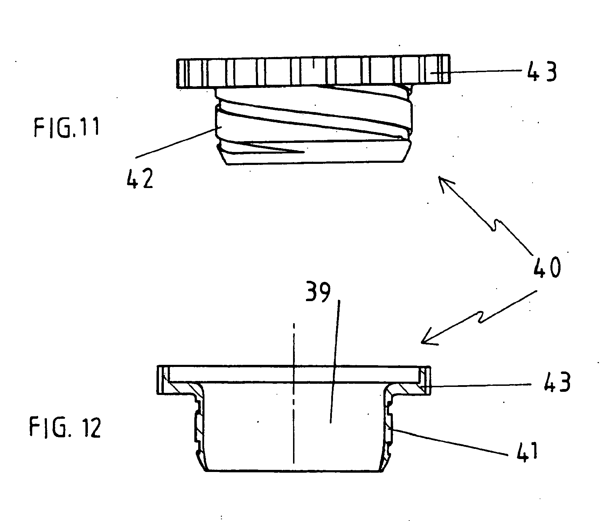

- Figur 11: eine Seitenansicht eines Verstellringes,
- Figur 12: eine Schnittansicht durch den in der Figur 11 gezeigten Verstellring,
- Figur 13: eine perspektivische Ansicht von innen und somit vom Muffeninnenraum her auf eine erste axial außen angeordnete Ringscheibenverstärkung,
- Figur 14: eine perspektivische Ansicht auf die in der Figur 13 gezeigte Ringscheibenverstärkung von axial außen,
- Figur 15: eine Seitenansicht der in der Figuren 13 und 14 gezeigten Ringscheibenverstärkung,
- Figur 16: eine Schnittansicht entlang der Linie A - A in der Figur 15,
- Figur 17: eine perspektivische Ansicht von innen und somit vom Muffeninnenraum her auf eine zweite axial innen angeordnete Ringscheibenverstärkung,
- Figur 18: eine perspektivische Ansicht auf die in der Figur 17 gezeigte zweite Ringscheibenverstärkung von axial außen,
- Figur 19: die in der Figuren 17 und 18 gezeigte zweite Ringscheibenverstärkung in Seitenansicht,
- Figur 20: eine Schnittansicht entlang der Linie A - A in der Figur 19,
- Figur 21: eine der Figur 17 analoge Ansicht mit teilweise aufgesteckten Aufsätzen,
- Figur 22: eine perspektivische Ansicht von innen und somit vom Muffeninnenraum her auf eine Dichtung
- Figur 23: eine perspektivische Ansicht auf die in der Figur 22 gezeigte Dichtung von axial außen,
- Figur 24: die in der Figuren 22 und 23 gezeigte Dichtung in Seitenansicht,
- Figur 25: eine Schnittansicht entlang der Linie A - A in der Figur 24,
- Figur 26: verschiedene perspektivische Ansichten eines Aufsatzes,

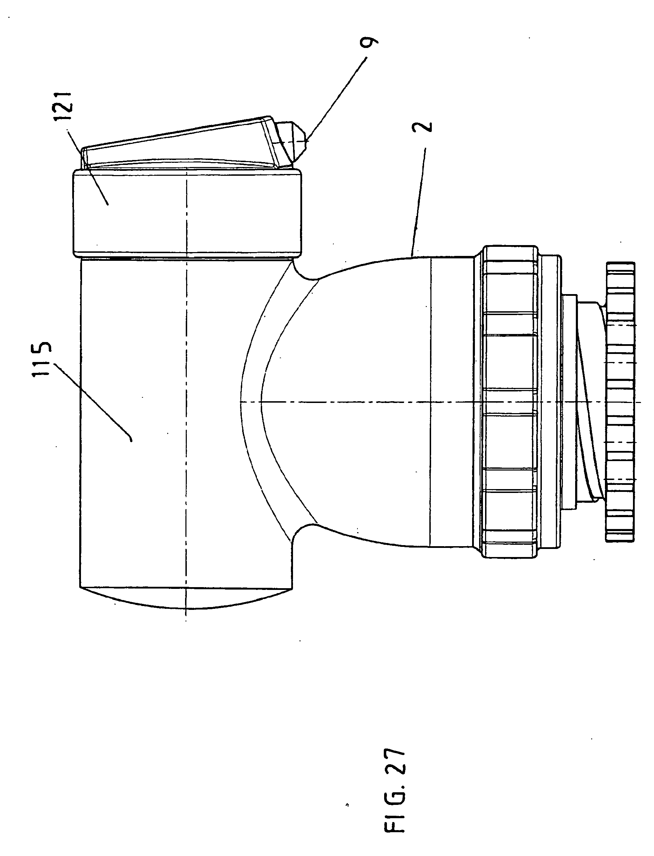

- Figur 27: eine Seitenansicht einer weiteren Ausführungsform der erfindungsgemäßen Adapter-Kupplung mit angesetzter Filtereinheit,

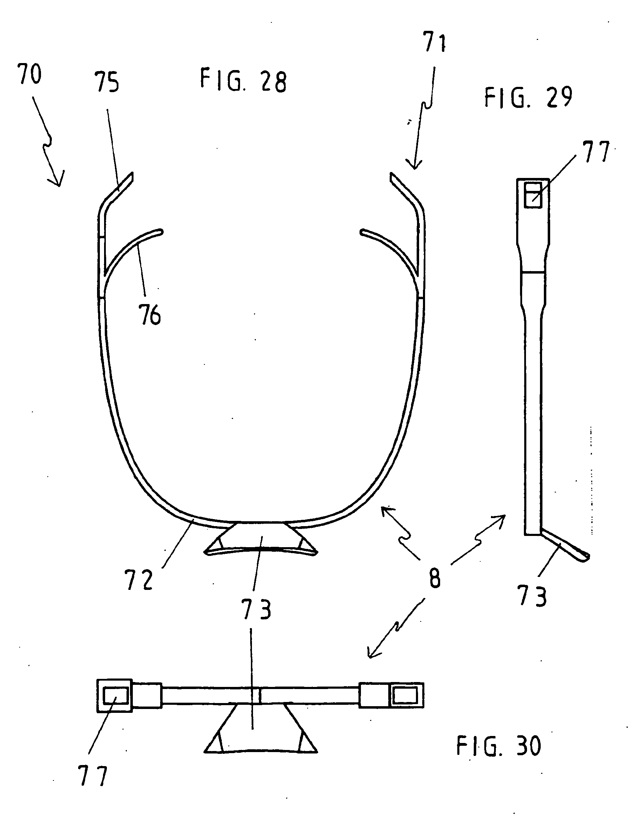

- Figur 28: eine Vorderansicht eines Sicherungsbügels,
- Figur 29: eine Seitenansicht des in der Figur 28 gezeigten Sicherungsbügels,
- Figur 30: eine Aufsicht von oben auf den in der Figur 28 gezeigten Sicherungsbügels,
- Figur 31: eine Seitenansicht eines Einsatzes 38,
- Figur 32: eine Aufsicht auf den in der Figur 31 gezeigten Einsatz von oben,
- Figur 33: eine perspektivische Ansicht des in der Figur 31 gezeigten Einsatzes,
- Figur 34: einen Schnitt entlang der Linie A-A der Figur 32,
- Figur 35: eine perspektivische Ansicht eines konusförmigen Zylinders,
- Figur 36: eine Längsschnittansicht des in der Figur 35 gezeigten konusförmigen Zylinders,
- Figur 37: eine Seitenansicht eines Ventileinsatzes,
- Figur 38: eine Schnittansicht entlang der Linie A-A des in der Figur 37 gezeigten Ventileinsatzes,
- Figur 39: eine Aufsicht von unten auf den in der Figur 37 gezeigten Ventileinsatz,
- Figur 40: eine Aufsicht auf einen Stützring,
- Figur 41: einen Schnitt entlang der Linie A-A des Stützringes der Figur 40,
- Figur 42: einen Schnitt entlang der Linie B-B in der Figur 40,
- Figur 43: einen Schnitt entlang der Linie D-D der Figur 40 und
- Figur 44: eine Schnittansicht durch die in der Figur 27 gezeigte Adapter-Kupplung mit angesetzter Filtereinheit mit einer weiteren Ausführungsform eines Sicherungsbügels.

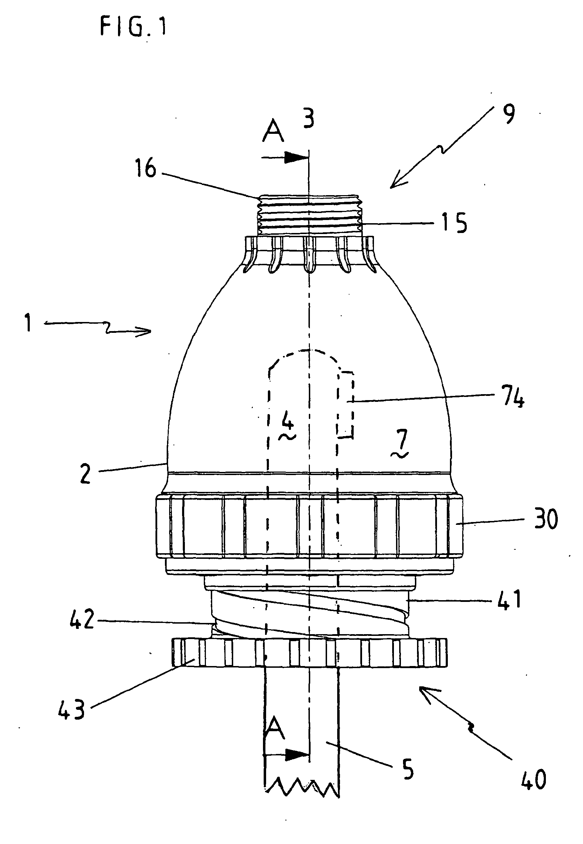

Die erfindungsgemäße Adapter-Kupplung 1 besitzt gemäß Figur 1 eine in etwa haubenförmige oder glockenförmige Muffe 2, die einen Wasserauslass 9 in Form eines mit einem Außengewinde 15 versehenen Auslaufstutzens 16 besitzt und in deren Muffeninnenraum 7 das wasserabgebende Ende 4 eines Wasserauslaufes 5 eingeschoben bzw. eingeführt ist. Der eigentliche Wasserhahn bzw. dessen Ventil ist dabei in der Figur 1 nicht gezeigt.

An den Auslaufstutzen 16 kann ein üblicher Wasserschlauch mit einer Gewindekappe oder ähnlichem auf per se bekannte Weise verbunden werden.

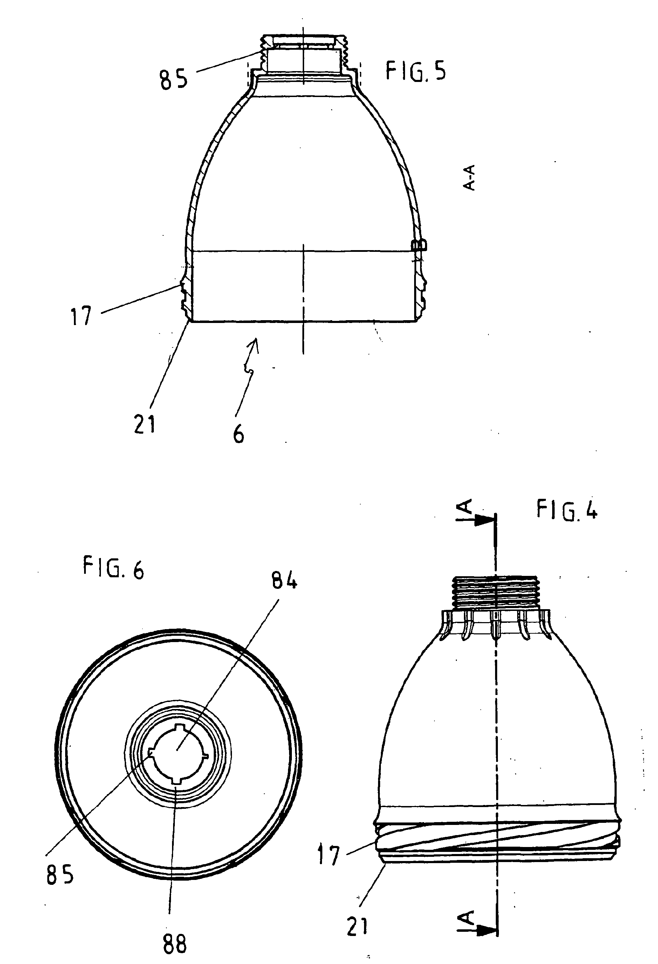

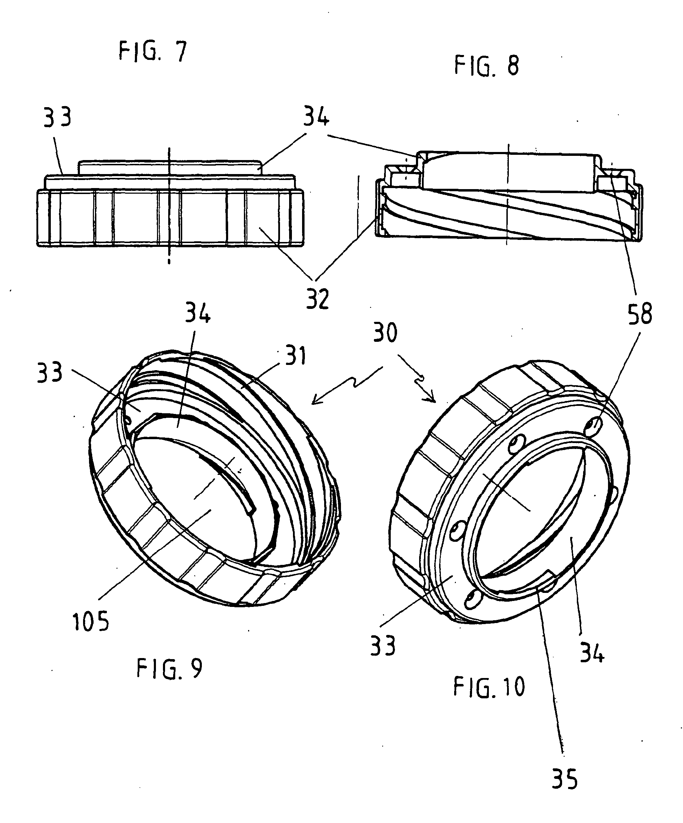

Dem Auslaufstutzen 16 axial gegenüberliegend befindet sich die Muffenöffnung 6, die von dem umlaufenden Rand 21 eingefasst wird, siehe Figur 5. Außen auf der Muffe 2 befindet sich am muffenöffnungsseitigen Ende ein Außengewinde 17, auf das ein Ringdeckel 30 mit einem Innengewinde 31 aufschraubbar ist. Der Ringdeckel 30 (Figuren 7 - 10) besitzt einen axialen Abschnitt 32 und einen radialen Abschnitt 33, der eine zentrale Öffnung 105 einfasst, durch die der Wasserauslauf 5 eingeschoben werden kann. Das genannte Innengewinde 31 ist an der Innenmantelfläche des axialen Abschnitts 32 des Ringdeckels 30 ausgebildet.

Der radiale Abschnitt 33 des Ringdeckels 30 geht radial innen in einen sich axial nach innen und außen erstreckenden zylindrischen Fortsatz 34 über.

Wenn im Rahmen der vorliegenden Unterlagen von axialer Richtung die Rede ist, dann bedeutet dies in Richtung der bzw. parallel zur Achse 3 der Muffe 2. Die Angaben "axial außen" bzw. "axial innen" beziehen sich auf eine Betrachtung vom Muffeninnenraum 7 her in Richtung der Achse 3 nach außen und somit einerseits zum Wasserauslass 9 und andererseits zur Muffenöffnung 7 hin.

In den sich axial erstreckenden zylindrischen Fortsatz 34 des Ringdeckels 30 greift ein Verstellring 40 mit einem zylindrischen Abschnitt 41 ein, auf dessen Außenmantelfläche ein Außengewinde 42 angeordnet ist, das mit einem Gewindegang 35 (man vergleiche Figuren 8, 9 und 10) an der Innenmantelfläche des zylindrischen Fortsatzes 34 zusammenwirkt. Auch dieser Verstellring 40 besitzt eine zentrale Öffnung 39.

Axial außen geht der zylindrische Abschnitt 41 des Verstellringes 40 in einem sich radial erstreckenden gerändelten Flansch 43 über. Ergreift der Benutzer diesen Flansch 43 und dreht er den Verstellring 40, dann verschiebt sich dieser in Axialrichtung und somit in Richtung der Achse 3, und zwar je nach Drehrichtung nach axial innen oder axial außen.

Zum Abdichten des Muffeninnenraumes 7 nach außen und gegenüber dem eingeschobenen Wasserauslauf 5 dient eine elastische Dichtung 12, die weiter unten näher beschrieben wird.

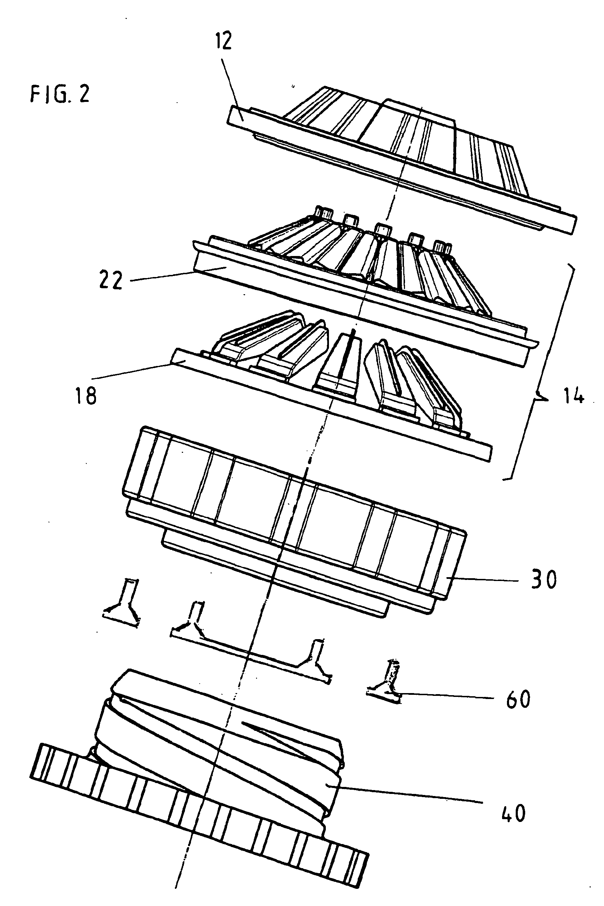

Um zu verhindern, dass diese Dichtung 12 durch den im Muffeninnenraum 7 herrschenden Wasserdruck nach axial außen gedrückt wird, dient eine Stützeinheit 14, die aus einer ersten Ringscheibenverstärkung 18 und einer zweiten Ringscheibenverstärkung 22 aufgebaut ist, man vergleiche Figur 2.

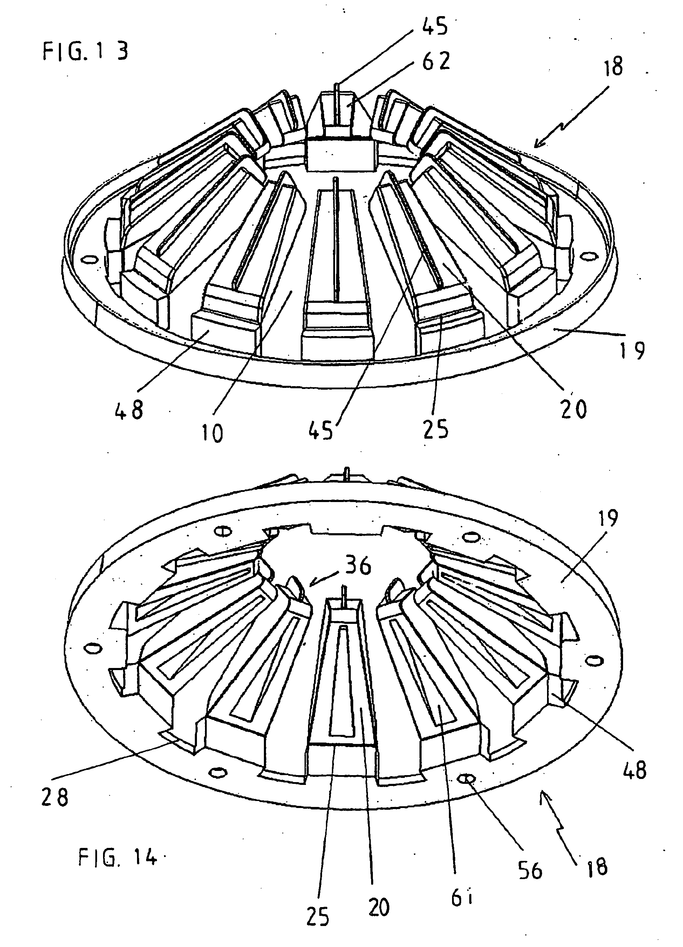

Die axial äußere erste Ringscheibenverstärkung 18 ist in den Figuren 13 bis 16 näher gezeigt. Diese Ringscheibenverstärkung 18 besitzt einen umlaufenden durchgehenden Ringbereich 19, von dem sich in Aufsicht leicht konisch nach radial innen verjüngende Zungen 20 nach radial innen erstrecken. Sie sind an ihrer Basis 25 mit Hilfe eines Filmscharniers an dem Ringbereich 19 angelenkt. Die Zungen 20 sind gleichmäßig verteilt auf dem Umfang beabstandet voneinander angeordnet. Zwischen diesen Zungen 20 wird ein Freiraum 10 definiert bzw. ein Raum 10 freigelassen. Somit sind auch die Freiräume 10 gleichmäßig in Umfangsrichtung verteilt angeordnet.

Die Zungen 20 besitzen in Seitenansicht in etwa Keilform. Der spitz zulaufende Rand dieses Keiles zeigt zum Ringbereich 19 hin und ist dort mittels eines Filmscharniers angelenkt. Die Zungen 20 sind dabei nicht direkt an diesem Ringbereich 19 sondern über einen sich in etwa axial erstreckenden Verbindungsbereich 48 mit dem Ringbereich 19 verbunden, worauf nachstehend noch näher eingegangen wird. Zwischen den Verbindungsbereichen 48 benachbarter Zungen 20 ist eine Ausnehmung 28 vorhanden.

Die Zungen 20 besitzen axial außen eine mittige, sich radial erstreckende Nut 61, deren Tiefe von radial außen nach radial innen zunimmt.

Auf der axial innenliegenden Seite der Zungen 20 ist ein sich in axialer Richtung erstreckender sowie radial verlaufender Steg 45 angeordnet. Dieser Steg 45 verläuft mittig. An dem radial inneren Ende 36 besitzen die Zungen 20 eine Fläche 62, deren Ebene bezüglich der Achse 3 geneigt ist. Die Flächen 62 aller Zungen 20 bilden eine Art sich nach axial innen öffnenden Trichter. Der Steg 45 erstreckt sich auch mittig auf diesen Flächen 62.

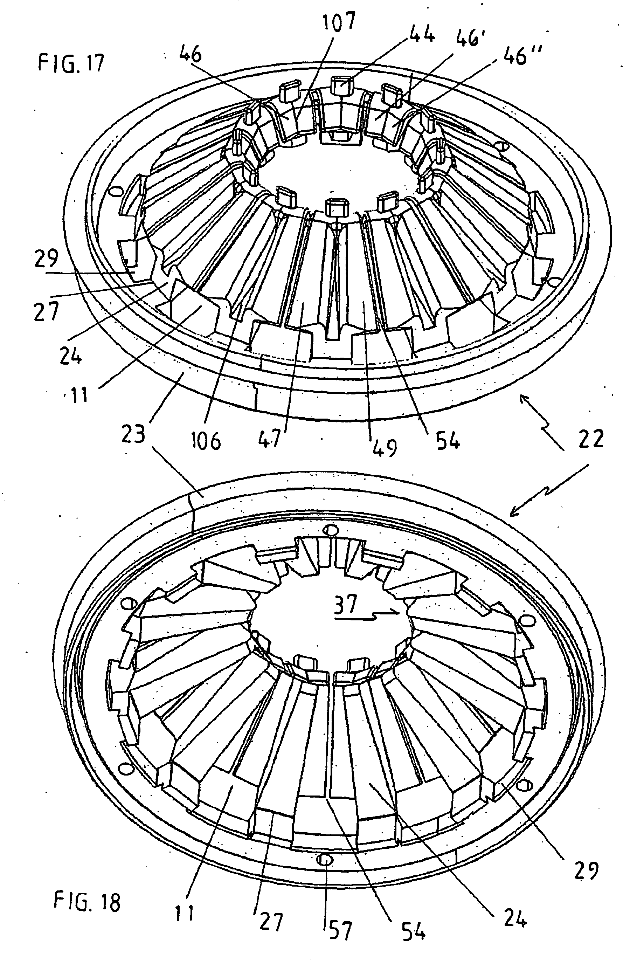

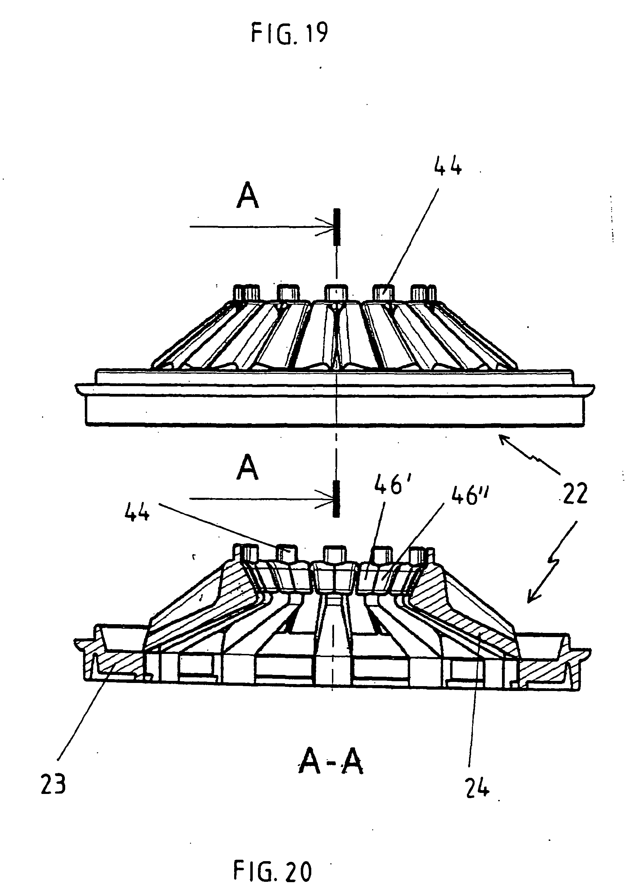

Bei dem zweiten Element der Stützeinheit 14 handelt es sich um die in den Figuren 17 - 21 näher gezeigte zweite Ringscheibenverstärkung 22, die ähnlich aufgebaut ist, wie die oben beschriebene erste Ringscheibenverstärkung 18. So besitzt auch die zweite Ringscheibenverstärkung 22 einen umlaufenden Ringbereich 23, von dem sich mehrere auf dem Umfang gleichmäßig verteilte Zungen 24 nach radial innen erstrecken. Zwischen diesen Zungen 24 sind Freiräume 11 ausgebildet. Die Zungen 24 verjüngen sich, in axialer Aufsicht betrachtet, leicht konisch nach radial innen sind und sind an ihrer Basis 27 an dem umlaufenden Ringbereich 23 beweglich mittels eines Filmscharniers angelenkt.

Die Zungen 24 besitzen an ihren beiden sich radial erstreckenden Seitenrändern jeweils einen Seitenflügel 47, 49, die sich ebenfalls radial erstrecken und deren Breite sich nach radial innen leicht verringert. Die Seitenflügel 47, 49 sind an dem axial inneren Bereich der Zungen 24 in der Art eines "Topdeckers", überdecken den Freiraum 11 angebracht und liegen im zusammengebauten Zustand der Adapterkupplung auf den Flächen 62 der Zungen 20 der ersten Ringscheibenverstärkung 18 auf. Zwischen zwei Seitenflügeln 47, 49 benachbarter Zungen 24 ergibt sich ein Spalt 54, in den der Steg 45 der Zungen 20 der ersten Ringscheibenverstärkung 19 hineinragt.

Die Dicke der Seitenflügel 47, 49 verringert sich ausgehend von der Mitte der Zungen 24 zu den Seitenrändern dieser Seitenflügel 47, 49 hin. Zwischen den beiden Seitenflügeln 47, 49 befindet sich eine Art radial erstreckende Nut 106.

Wie man insbesondere aus der Figur 17 ersieht, ergibt sich durch diese Ausgestaltung in Umlaufrichtung eine Art "Berg- und Talfahrt". Bei aufgesetzter Dichtung 12 wird das Dichtungsmaterial in die Nuten 106 eingepresst, wodurch ein Verrutschen der Dichtung verhindert wird.

Die Zungen 24 der zweiten Ringscheibenverstärkung 22 besitzen in der Nähe ihres radial inneren Endes 37 einen sich in etwa nach axial innen sowie in etwa axialer Richtung erstreckenden Nippel 44. Die Zungen 24 besitzen zudem an ihrem radial inneren Ende 37 jeweils eine Fläche 46, die in zwei Teilflächen 46', 46" unterteilt ist. Diese Teilflächen 46', 46" sind in etwa eben; die Trennungslinie verläuft dabei radial sowie mittig. Die Flächen 46 der Zungen 24 bzw. die Teilflächen 46', 46" bilden einen sich nach innen erweiternden Trichter. Die beiden Teilflächen 46', 46" schließen dabei einen Winkel an der Trennungslinie 107 ein, der kleiner ist als 180°. Mit anderen Worten, die beiden Teilflächen 46', 46" bilden eine Art flaches Tal.

Die Fläche 46 bzw. die Teilflächen 46', 46" erstrecken sich im Umfangsrichtung im übrigen nicht nur im Bereich des radial inneren Endes 37 der Zungen 24 sondern auch im Bereich des radial inneren Endes der Seitenflügel 47, 49. Die Seitenflügel 47, 49 sind an ihrem radial inneren Ende quasi in Form eines Grates oder eines Firstes ausgestaltet und gehen in den geschilderten Trichter bzw. in die Teilflächen 46', 46" über. Die Nippel 44 erstrecken sich quasi schornsteinförmig vom höchsten Punkt dieses Firstes oder Grates.

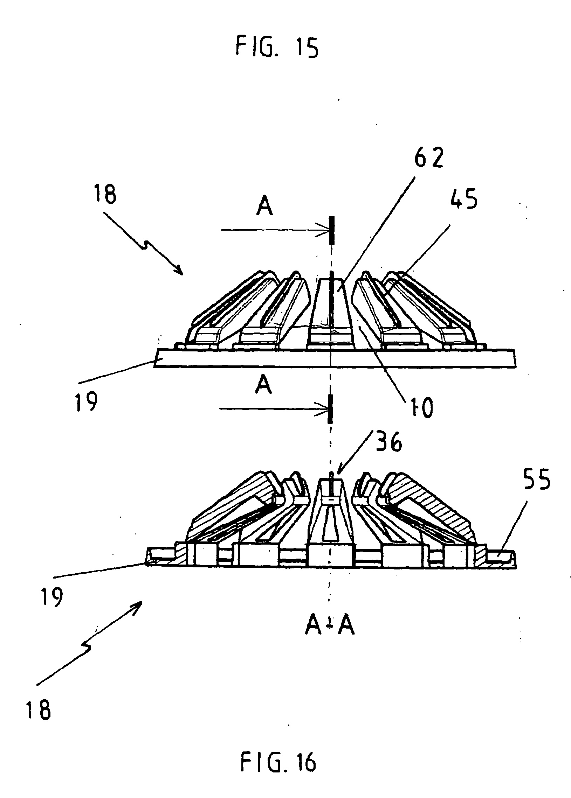

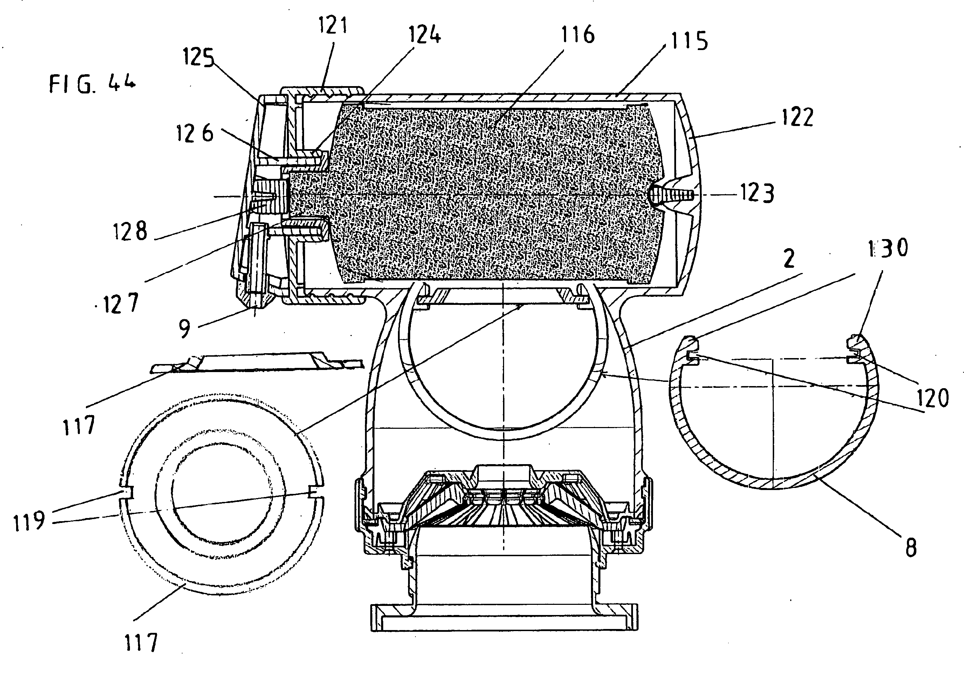

Der umlaufende Ringbereich 19 der ersten Ringscheibenverstärkung bildet eine U-förmige Nut 55 (Figur 16), deren Basis nach axial außen zeigt und die somit nach axial innen offen ist. Der umlaufende Ringbereich 23 der zweiten Ringscheibenverstärkung 22 ist derart ausgestaltet, dass er möglichst formschlüssig in diese Nut 55 der ersten Ringscheibenverstärkung einsetzbar ist; dieser Zustand ist in der Figur 44 gezeigt, bei der die ersten Ringscheibenverstärkung 18 und die zweite Ringscheibenverstärkung 22 quasi ineinander gesetzt sind.

Beim Einsetzen der ersten Ringscheibenverstärkung 18 in die zweite Ringscheibenverstärkung 23 bzw. bei derem Aufeinandersetzen kommen die Zungen 20 und 24 in etwa auf der gleichen axialen Höhe bzw. Ebene zu liegen. Die Zungen 20 kommen dabei im Freiraum 11 zwischen den Zungen 24 zu liegen und füllen diesen mehr oder weniger aus, während die Zungen 24 in dem Freiraum 10 zwischen den Zungen 20 zu liegen kommen und diesen mehr oder weniger ausfüllen. Die Zungen 20 und 24 bilden somit einen fast durchgehenden Ringbereich zur Anlage an die Dichtung 12. Damit die Zungen 20 und 24 auf in etwa der gleichen axialen Höhe angeordnet sind, sind die Zungen 20 der ersten Ringscheibenverstärkung 18 über den oben beschriebenen, sich axial erstreckenden Verbindungsbereich 48 mit dem dazugehörigen Ringbereich 19 verbunden. Der Verbindungsbereich 48 kommt in einer Ausnehmung 29 zwischen der Basis 27 von zwei benachbarten Zungen 24 zu liegen, während die Basis 27 der Zungen 24 in einer Ausnehmung 28 der ersten Ringscheibenverstärkung 18 zu liegen kommen.

Im nicht aufgeweiteten Zustand werden die Freiräume 10, 11 einer Ringscheibenverstärkung 18, 22 durch die Zungen 20, 24 der jeweils anderen Ringscheibenverstärkung 18, 22 in etwa ausgefüllt. Beim Einschieben des wasserabgebenden Endes 4 werden diese Zungen unter Aufweitung der zentralen Öffnung 13 der Dichtung nach außen weggeschwenkt. Dadurch vergrößern sich natürlich auch die Freiräume 11 bzw. 10 zwischen den dazugehörigen Zungen. Dieser erweiterte Freiraum wird nun durch die Flügel 47 und 49 der zweiten Ringscheibenverstärkung 22 abgedeckt. Es ergibt sich kein freier Zwischenraum bzw. kein Spalt, durch welche die Dichtung 12 hindurchgedrückt werden könnte. Beim aufgeweiteten Trichter ist lediglich der Abstand der Seitenränder der Seitenflügel 47, 49 zum Steg 45 vergrößert. so dass für die Dichtung 12 nach wie vor eine im wesentlichen durchgehende vollständige Auflagefläche bzw. Andruckfläche der Stützeinheit 14 zur Verfügung steht. Das elastische Dichtungsmaterial kann nicht an irgendeiner Stelle nach außen hindurchgedrückt werden.

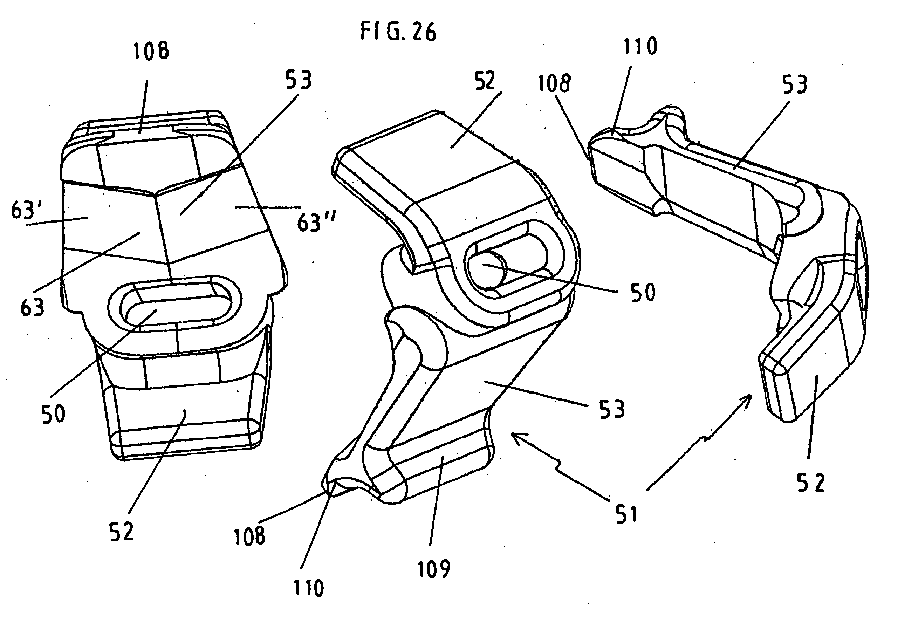

Auf die Nippel 44 der Zungen 24 der zweiten Ringscheibenverstärkung 22 können jeweils ein bügelförmig gebogener Aufsatz 51 aufgesteckt (Fig. 26) werden. Dazu besitzt dieser bügelförmig gebogener Aufsatz 51 eine Ausnehmung 50, die in etwa mittig angeordnet ist. Dieser Aufsatz 51 stellt in etwa einen gebogenen Streifen, bei dem die Ausnehmung 50 in etwa mittig angeordnet ist. Von beiden Seiten dieser Ausnehmung erstreckt sich dann eine Flanke 52, 53, und zwar einerseits nach radial innen und andererseits nach radial außen (Fig. 26).

Diese Aufsätze 21 werden - wie geschildert - auf die Nippel 44 aufgesetzt. Aufgrund ihrer Bogenform liegt die radial innere Flanke 53 auf der Fläche 46 bzw. den Teilflächen 46', 46" der Zungen 24 auf. Die den Teilflächen 46', 46" zugewandte Fläche 63 ist aus zwei Teilflächen 63', 63" aufgebaut, die zusammen einen sehr flachen Keil bilden, der in dem oben geschilderten, aus den Teilflächen 46', 46" gebildeten Tal aufliegt und durch die Formgebung zentriert wird.

Die radial äußere Flanke 52 des Aufsatzes 51 dient zum Einschieben in die nachstehend näher erläuterten Taschen 64 der Dichtung 12. Die Aufsätze 51 weisen eine derartige Krümmung auf, dass, wenn die Teilflächen 46', 46" und 63', 63" miteinander in Anlage sind, der radial äußere Flügel 52 des Aufsatzes 51 von den Seitenflügeln 47, 49 der Zungen 24 beabstandet ist und parallel sich dazu erstreckt. In diesem Zwischenraum zwischen der Flanke 52 und den Seitenflügeln 47, 49 kommt der Taschenaußenrand der Tasche 64 der Dichtung 12 zu liegen.

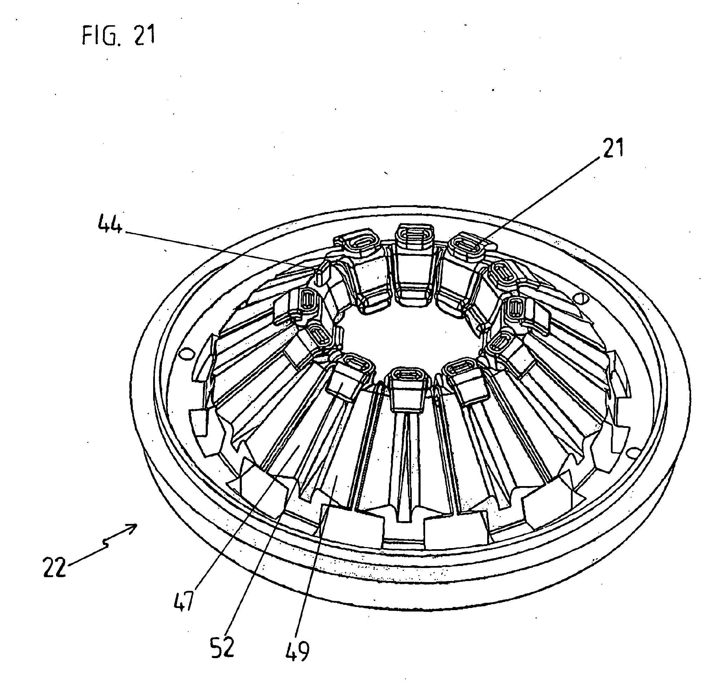

Die Flanken 53 der Aufsätze 51 besitzen in der Nähe ihres freien, der Ausnehmung 50 gegenüberliegenden Randes einen Wulst 109, der sich nach radial innen erstreckt. Die Wülste 109 bilden zusammen eine Art umlaufenden Ring. Der sich an diesen Wulst 109 bis zum Rand 108 anschließende Fortsatz 110 erstreckt sich über die Fläche 46 der Zungen 24 hinaus (man vergleiche Figur 21).

Um die Ringscheibenverstärkungen 18, 22 aufeinander auszurichten, sind diese mit Bohrungen 56 bzw. 57 versehen, die im zusammengebauten Zustand fluchten. Zur Befestigung dieser beiden Ringscheibenverstärkungen 18, 22 werden von axial außen durch Bohrungen 58 in dem radialen Abschnitt 33 konisch verlaufende Stifte 59 geschoben, die durch Reibschluss die beiden Ringscheibenverstärkungen 18, 22 mit dem Ringdeckel 30 verbinden. Diese Stifte 59 besitzen einen Kopf, so dass sie nicht durch die Bohrungen 58 hindurchgeschoben werden können, sondern für eine durch Stecken herstellbare Verbindung zwischen den Ringscheibenverstärkungen 18, 22 und dem Ringdeckel 30 Sorge tragen.

Zwei benachbarte Stifte 59 können mit einem ringsegmentförmigen flachen Verbindungsbereich 60 (Figur 2) verbunden sein.

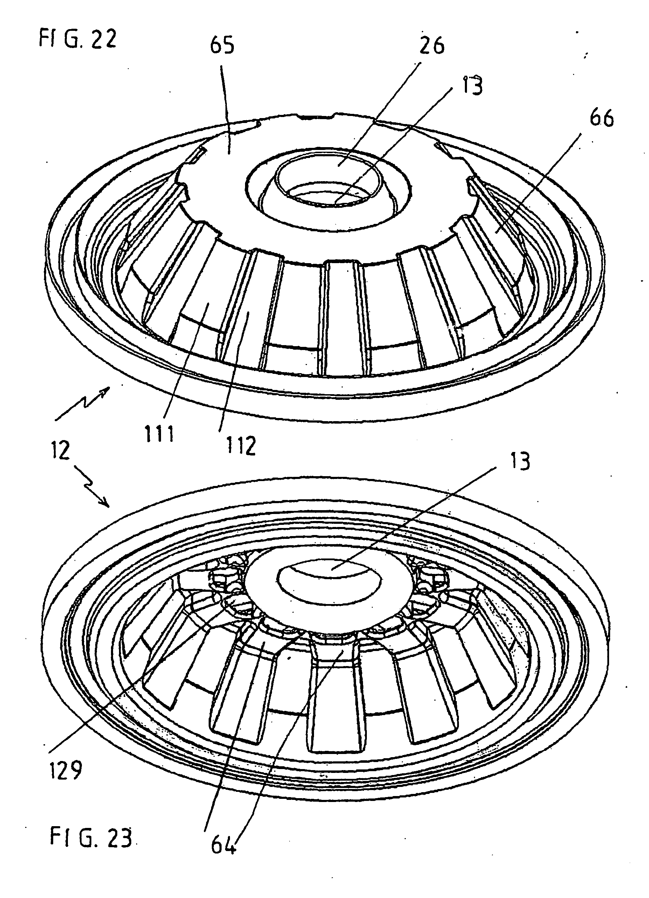

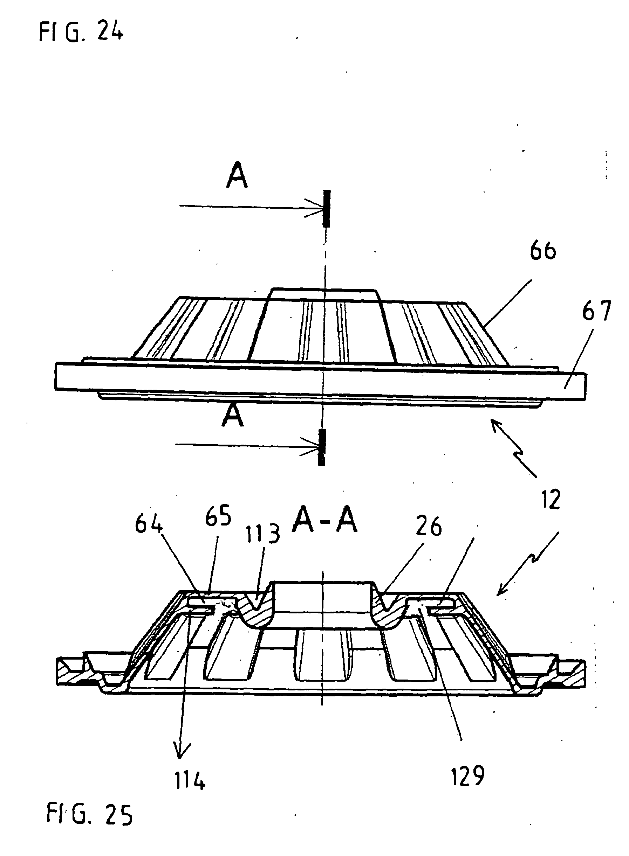

Die in der Figur 22 bis 25 gezeigte elastische Dichtung 12 besteht aus einem elastischen Material, z. B. einem Gummimaterial oder einem Silikonmaterial, und besitzt eine zentrale Öffnung 13, durch welche das wasserabgebende Ende 4 eines Wasserauslaufes 5 eingeschoben werden kann. Diese Öffnung 13 wird (Figur 25) durch einen Dichtring 26 eingefasst.

Die Dichtung 12 besitzt in etwa die Form eines runden Tellers mit einem Tellerboden 65, in dessen Zentrum die zentrale Öffnung 13 ausgebildet ist. Der Tellerboden 65 geht radial außen in eine Seitenwand 66 über, die schräg zur Längsachse 3 verläuft. Die Achse 3 steht dabei in etwa senkrecht auf der durch den Tellerboden 65 gebildeten Fläche.

Um den Dichtring 26 der Dichtung 12 läuft eine Art nach axial innen hin offener, in etwa U-förmiger Ringkanal 113 um.

Die Seitenwand 66 ist in streifenartige, nebeneinander liegende, sich radial erstreckende Bereiche 111 und 112 unterteilt, wobei die streifenartigen Bereiche 111 axial innen liegen, während die streifenartige Bereiche 112 axial außen liegen.

Axial außen sind an dem sich in etwa senkrecht zur Achse 3 erstreckenden Bereich des Tellerbodens 65 Taschen 64 (Figuren 23 und 25) ausgebildet, die sich radial erstrecken und nur nach radial innen hin offen sind bzw. eine Öffnung 129 besitzen.

Die Anzahl der Taschen 64 entspricht dabei der Anzahl der Aufsätze 51.

Die Ringscheibenverstärkungen 18 und 22 bestehen vorzugsweise aus Kunststoff und werden weiterhin vorzugsweise durch Spritzformen hergestellt. Würde man die Aufsätze 51 zuerst auf die dazugehörigen Nippel aufsetzen und fest mit den Zungen 24 verbinden, dann wäre es herstellungstechnisch schwierig, die Flanken 52 in die Taschen 64 der Dichtung 12 einzusetzen oder hineinzuschieben. Daher stellen die Aufsätze 51 separate Teile dar, die mit ihren Flanken 52 in die Taschen 64 eingesetzt werden. Erst danach wird die Dichtung 12 zusammen mit den Aufsätzen 51 auf die zweite Ringscheibenverstärkung 22 aufgesetzt. Dies geschieht derart, dass die Aufsätze 51 mit ihren Ausnehmungen 50 auf die Nippel 44 aufgeschoben werden. Danach werden die Aufsätze 51 im Bereich der Fortsätze 110 der Aufsätze 51 mit dem Material der Zungen 24 verschmolzen, wobei die Flächen 46 und 63 aufeinanderliegen. Dies führt zu einer festen Verbindung und Fixierung der Aufsätze 51 auf den Zungen 24. Eine Wippbewegung um die Nippel 44 ist nicht mehr möglich. Die Biegung der Aufsätze 51 wird dabei derart gewählt, dass nach dem festen Verbinden der Aufsätze 51 mit den Zungen 24 sowie im nicht aufgeweiteten Zustand des Trichters die Flanken 52 einen gewissen Winkel mit der Achse 3 bilden. Anders ausgedrückt, das radial äußere Ende der Taschen 64 wird durch die eingeschobenen Flanken 52 in Richtung des Pfeils 114 (Figur 25) bewegt. Dadurch wird eine gewisse Vorspannung erreicht.

Die Dichtung 12 ist im übrigen einstückig; die hier erwähnten Elemente, z. B. Dichtringe 26, 61 usw. dienen zur Erläuterung von Abschnitten und Bereichen der Dichtung 12.

Der Wulst 109 stützt im zusammengebauten Zustand den Boden des Ringkanals 113 (Figur 25) axial außen sowie seitlich ab. Die Fortsätze 110 ragen weiter zur Längsachse 3 hin. Beim Einschieben des Wasserauslaufes 5 kommt letzterer gegen die Fortsätze 110 in Anlage und drückt dagegen, welche die Kraft auf die Dichtung 12 und die Ringscheibenverstärkungen 18, 22 überträgt und für eine Aufweitung des Trichters sorgt.

Die zusammengesetzte Stützeinheit 14 mit eingebauter Dichtung 12 ist in der Figur 44 im Schnitt gezeigt. Dort ist eine Kombination aus einer erfindungsgemäßen Adapter-Kupplung mit einer Filtereinheit wiedergegeben. Diese Ausführungsform wird weiter unten näher erläutert.

Beim Drehen des Verstellringes 40 kommt dieser mit seinem zylindrischen Abschnitt 41 gegen die Zungen 20, 24 der Stützeinheit 14 in Anlage, gleitet an ihnen entlang und schiebt sie zur Seite, so dass sie nach außen verschwenkt werden. Die Zungen 20, 24 nehmen die Dichtung mit und weiten die zentrale Öffnung 13 und damit den Dichtring 26 auf, so dass das wasserabgebende Ende 4 in den Muffeninnenraum 7 hineingeschoben werden kann, ohne in Kontakt mit der Dichtung 12 zu gelangen. Danach wird der Verstellring 40 hinausgedreht, so dass sich der Dichtring 26 wieder zusammenzieht und an die Außenmantelfläche des Wasserauslaufes 50 unter fluiddichter Abdichtung anlegt. Wird dann der Muffeninnenraum mit Wasser gefüllt und die Dichtung 12 mit Druck beaufschlagt, dann kann die Dichtung 12 aufgrund der Auflage auf der Stützeinheit 14 bzw. den Zungen 20 und 24 und den dazugehörigen Flügeln 47, 49 nicht nach außen vorgestülpt werden, denn diese Einheit bildet eine Art nach innen gewölbter Kupplung.

Zum Abnehmen der Adapter-Kupplung 1 wird dann der Verstellring 40 wieder hineingeschraubt, so dass das wasserabgebende Ende 4 des Wasserauslaufes 5 ohne Schwierigkeiten und ohne Verletzung der Dichtung 12 und insbesondere des Dichtringes 26 herausgezogen werden kann.

Innen im Muffeninnenraum 7 befindet sich ein U-förmiger Sicherungsbügel 8 aus einem flachbandartigen Material mit einem rechteckigen Materialquerschnitt. Die beiden freien Enden 70, 71 des Sicherungsbügels 8 sind auf der von der Muffenöffnung 6 abgewandten Seite an der Muffe 2 befestigt. Die Basis 72 dieser U-Form liegt vor der zentralen Öffnung 13 der Dichtung 12. An dieser Basis 72 ist eine schräg zur Längsachse 3 verlaufende Gleitfläche 73 angeordnet, die eine Art Gewölbeausschnitt darstellt. Beim Einschieben des wasserabgebenden Endes 4 kommt dieses gegen die Gleitfläche 73 in Anlage und schwenkt den Sicherungsbügel 8 zur Seite weg. Dies ist dann von Bedeutung, wenn das wasserabgebende Ende 4 mit einem Perlator 74 (Figur 1) ausgestattet ist. Dieser Perlator 74 wird über die Basis 72 der U-Form des Sicherungsbügels 8 nach axial innen hineingeschoben. Danach wird die Muffe 2 bezüglich des wasserabgebenden Endes 4 verdreht. Sollte das wasserabgebende Ende 4 dann irgendwie nach außen hinausgezogen oder hinausgedrückt werden, verhakt sich der Perlator 74 innen an der Basis 72. Zum Herausziehen des wasserabgebenden Endes 4 ist es dann lediglich erforderlich, die Muffe 2 gegenüber dem wasserabgebenden Ende 4 zu verdrehen. Um diesen Vorgang zu erleichtern, ist die Muffe 2 außen mit einer Markierung (in den Figuren nicht gezeigt) versehen, welche dem Benutzer anzeigt, wie er die Muffe 2 auf das wasserabgebende Ende 4 mit dem Perlator 74 aufschieben soll.

Die freien Enden 70 und 71 des Sicherungsbügels 8 besitzen jeweils zwei freie Abschnitte 75, 76. Der axial innere freie Abschnitt 75 besitzt eine Ausnehmung 77, die über einen Vorsprung 78 an einem Einsatz 38 gehängt werden kann. Dieser Einsatz 38 wird im Muffeninnenraum 7 an dem Auslaufstutzen 16 befestigt. Der Einsatz 38 besitzt ein in etwa scheibenförmiges Element 79, das mit seinem Rand an der Innenwandung der Muffe 2 anliegt und ist mit zahlreichen Bohrungen 80 durchsetzt. Das scheibenförmige Element 79 erstreckt sich somit in etwa quer zur Längsachse 3. Von diesem scheibenförmigen Element 79 erstrecken sich in Axialrichtung zwei kreuzweise angeordnete Flanken 81, die zum Auslaufstutzen 16 hin in sich axial erstreckende Krallen 82 übergehen, die an ihrem freien Ende einen nach radial außen hervorragenden Absatz 83 besitzen.

Der Einsatz 38 wird vom Muffeninnenraum 7 her in den Anschlussstutzen 16 hineingeschoben. Die Innenkontur des Anschlussstutzens 16 (Figuren 5 und 6) ist dabei derart ausgebildet, dass die dortige Öffnung 84 mehrere nach radial außen sich erstreckende Ausnehmungen 85 besitzt, durch die hindurch die Krallen 82 nach außen hindurchgeschoben werden können. Diese Krallen 82 stellen dabei passive Krallen dar, denn sie sind derart dimensioniert und ausgestaltet, dass sie mit ihren nach axial außen ragenden Absätzen 83 die Einfassung 88 der Öffnung 84 nicht hintergreifen.

Um den Einsatz 38 zu fixieren, wird von außen ein konusförmiger Zylinder 86 hineingeschoben, welcher die Krallen 82 nach radial außen drückt, so dass sie aktive Krallen werden und die Einfassung 88 hintergreifen. Dieser Zylinder 86 besitzt einen umlaufenden, sich nach radial außen erstreckenden, Flansch 87, der verhindert, dass dieser Zylinder 86 zu weit in die Muffe 2 hineingeschoben wird. Auf diese Weise kann der Einsatz 38 durch reines Einstecken des Zylinders 86 mit der Muffe 2 dauerhaft befestigt werden und auch wieder gelöst werden, wenn der Zylinder 86 wieder hinausgezogen wird.

Der konusförmige Zylinder 86 stellt ein Hohlzylinder dar und besitzt einen Durchlass 90, durch den Wasser aus dem Muffeninnenraum 7 der Muffe 2 nach außen fließen kann. Der Flansch 87 ist an dem axial äußeren Rand dieses Zylinders 86 angeordnet. Der Zylinder 86 stellt somit eine Art Zylinderrohr dar.

An der Innenwandung des Zylinders 86 ist ein radial innen gerichteter, umlaufender Vorsprung 91 vorgesehen, der eine zentrale Bohrung 92 besitzt, die sich in Flussrichtung des Wassers nach außen erweitert und einen Ventilsitz bildet.

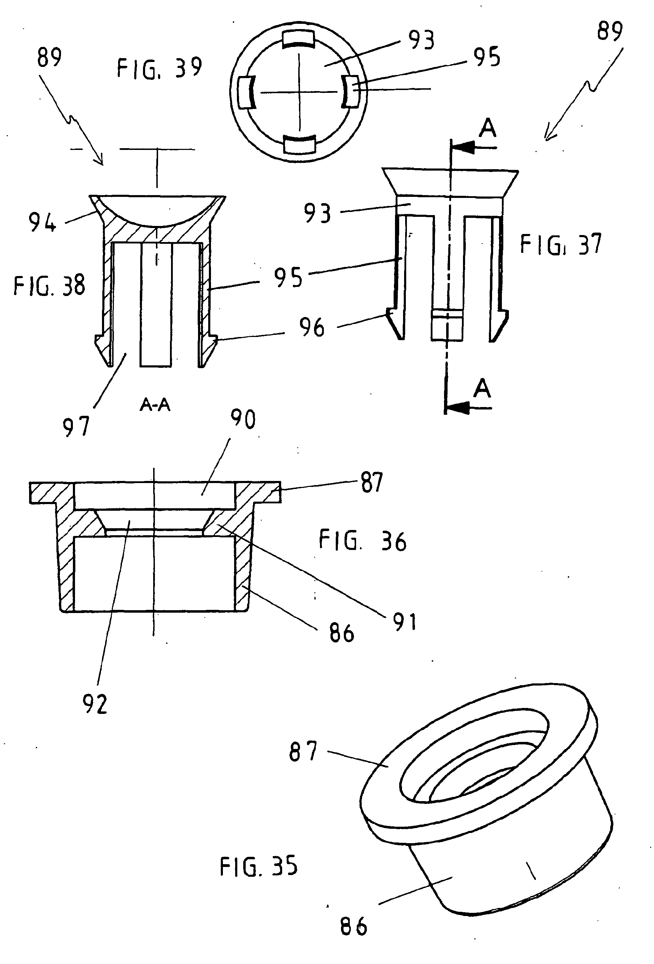

In die Bohrung 92 ist von außen der in den Figuren 37 - 39 gezeigte Ventileinsatz 89 einsetzbar. Dieser Ventileinsatz 89 besitzt eine scheibenförmige Basis 93, dessen Außenrand 94 abgeschrägt ist, so dass der Ventileinsatz 89 mit diesem Rand 94 auf dem sich nach außen erweiternden Rand der Bohrung 92 zu liegen kommt und den Durchlass 90 bzw. die Bohrung 92 verschließt.

Von den scheibenförmigen Basis 93 erstrecken sich zum Muffeninnenraum 7 hin vier Stege 95 in Axialrichtung, die an ihrem freien Ende eine nach radial außen vorspringenden Absatz 96 besitzen. Dieser Ventileinsatz 89 wird in den Zylinder 86 eingeschoben. Dabei hintergreifen die Absätze 96 der Stege 95 den Rand des umlaufenden Vorsprungs 91 des Zylinders 86.

Bei Druckbeaufschlagung drückt das Wasser im Muffeninnenraum 7 den Ventileinsatz 89 nach außen, bis die Absätze 96 in Anlage gegen den Vorsprung 91 kommen. Der Ventileinsatz 89 wird dann in dieser Position gehalten. Das Wasser kann durch die Zwischenräume 97 zwischen den Stegen 95 nach außen gelangen. Sollte das Wasser einmal zurückfließen, wird die scheibenförmige Basis 94 auf den Vorsprung 91 gedrückt und verschließt die Bohrung 92. Der Zylinder 86 stellt im Zusammenspiel mit dem Ventileinsatz 89 somit ein Rückschlagventil dar.

Alle Teile, aus denen die erfindungsgemäße Adapter-Kupplung 1 aufgebaut ist, können durch Spritzformen hergestellt werden. Vorzugsweise handelt es sich somit bei diesen Teilen um aus Kunststoff gefertigte Elemente. Lediglich die Dichtung 12 besteht aus einem elastischen Gummi- bzw. Silikonmaterial. Die Adapter-Kupplung lässt sich vollständig durch Ineinanderstecken und Ineinanderschieben der sie ausmachenden Teile und Elemente herstellen. Es ist nicht erforderlich, irgendwelche Schraubverbindungen oder andere Verbindungen zu generieren.

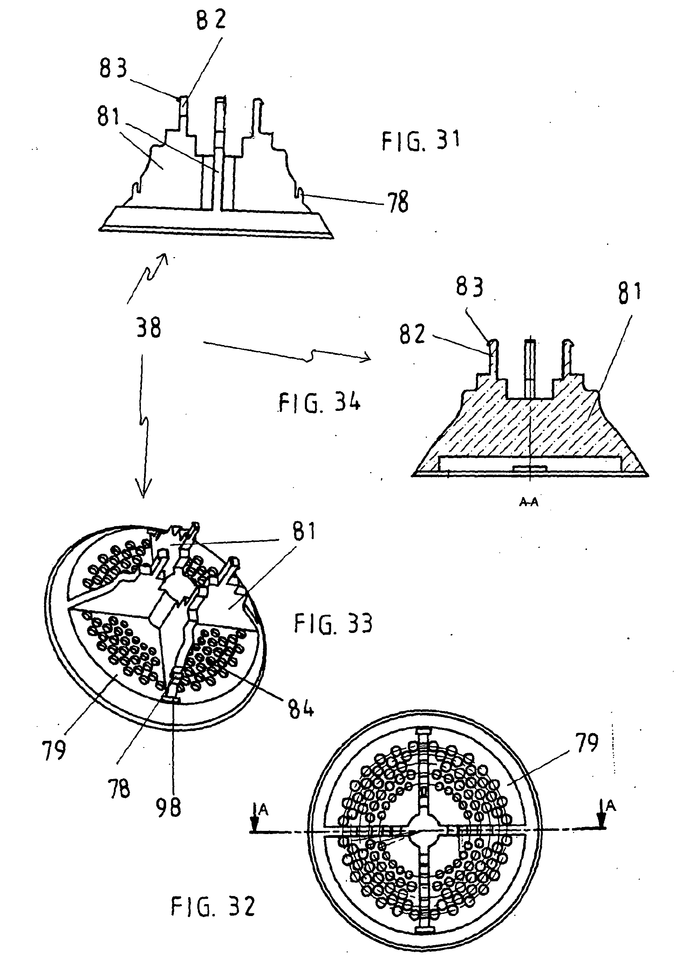

Damit auch der Sicherungsbügel 8 nur durch Stecken bzw. Einhängen dauerhaft am Einsatz 38 befestigt werden kann, wird der Sicherungsbügel 8 wie oben beschrieben an dem Vorsprung 78 am Einsatz 38 mit der Ausnehmung 77 eingehängt. Dazu wird der Sicherungsbügel 8 mit dem freien Abschnitt 75 durch eine durchgehende Ausnehmung 98 im scheibenförmigen Element 79 hindurch gesteckt (man vergleiche Figur 33) und über den Vorsprung 78 gehängt.

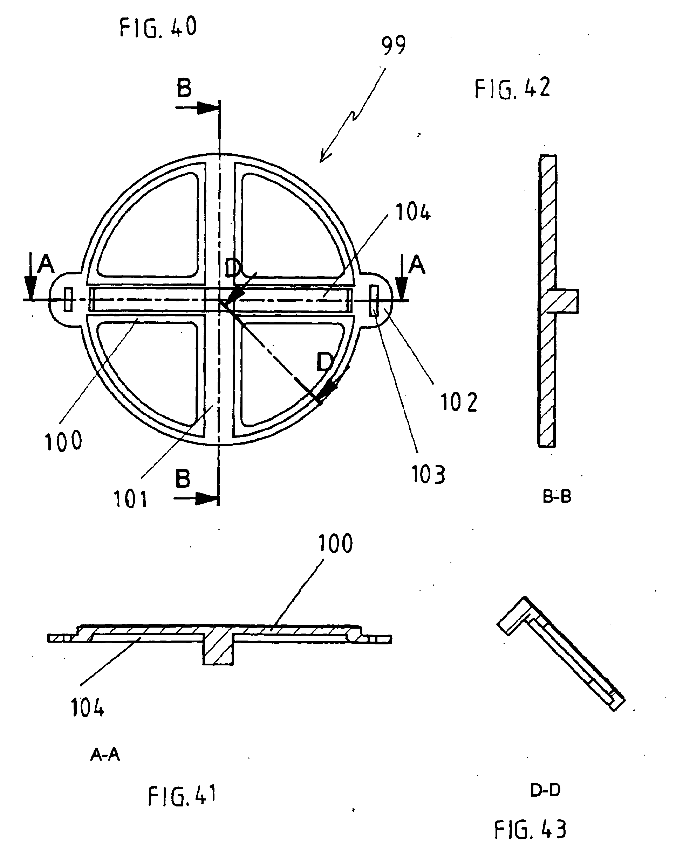

Das scheibenförmige Element 79 stellt eine Art Vorfilterscheibe dar. Zum Muffeninnenraum 7 hin liegt auf dem scheibenförmigen Element 79 ein Stützring 99 auf, der in den Figuren 40, 41, 42 und 43 näher gezeigt ist. Dieser Stützring 99 besitzt zwei, ein Kreuz bildende, Balken 100, 101. Radial außen von den Balken 100 befindet sich eine Lasche 102 mit einer Ausnehmung 103, welche in etwa der Ausnehmung 98 in dem scheibenförmigen Element 79 entspricht und damit fluchtet. Der freie Abschnitt 75 ragt somit auch durch diese Ausnehmung 103 hindurch.

Der näher zur Basis 72 des Sicherungsbügels 8 angeordnete freie Abschnitt 76 ist zur Längsachse 3 hin gebogen ausgebildet und kommt mit seinem freien Ende in einer Nut 104 zu liegen, die in dem Balken 100 des Stützringes 99 ausgebildet ist. Die freien Abschnitte 75 und 76 des Sicherungsbügels 8 sind dabei derart ausgebildet, dass der freie Abschnitt 76 bei eingehängter Ausnehmung 77 federnd gegen den Boden der Nut 104 im Stützring 99 drückt. Dadurch übt der gebogene freie Abschnitt 76 eine Kraft in Richtung auf die Muffenöffnung 6 aus und hält den Sicherungsbügel 8 in der gewünschten Position.

In der Figur 44 ist eine bereits oben erwähnte weitere Ausführungsform im Schnitt gezeigt, bei der eine erfindungsgemäße Adapter-Kupplung mit einer Filtereinheit kombiniert ist. Die Muffe 2 der Adapter-Kupplung geht in ein Gehäuse 115 für eine Filterpatrone 116 über. Der Wasserauslass 9 befindet sich seitlich an dem Gehäuse 115.

Im Übergangsbereich zwischen der Muffe 2 und dem Gehäuse 115 befindet sich eine Ringscheibe 117 mit einer zentralen Öffnung 118, durch die das Wasser in das Innere des Gehäuses 115 dringen kann.

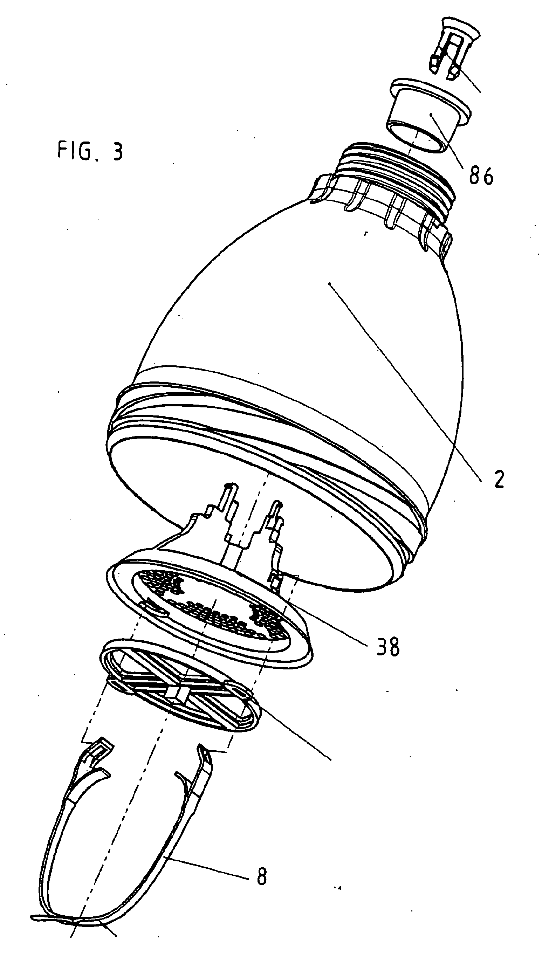

Die Ringscheibe 117 besitzt zwei einander diametral gegenüberliegende Ausnehmungen 119, in die ein Sicherungsbügel 8 einschnappt. Dazu besitzt der Sicherungsbügel 8 zwei einander gegenüberliegende, zueinander hin zeigende U-förmige Ausnehmungen 120. Die freien Enden 130 des Sicherungsbügels 8, dessen Funktion dem in der Figur 3 gezeigten Sicherungsbügel 8 entspricht, werden nach dem Einsetzen in die in der Figur 44 gezeigte Position mit dem Gehäuse 115 verschmolzen, wodurch eine Fixierung erreicht wird. Gleichzeitig wird dadurch auch die Ringscheibe 117 fixiert.

Das Gehäuse 115 stellt einen Zylinderbecher dar, an dessen Seitenwand die Muffe 2 angeformt ist. Im Boden 122 befindet sich eine Ausstoßvorrichtung 123 für die Filterpatrone 116.

Die Becheröffnung wird durch einen aufschraubbaren Deckel 121 verschlossen, der einen zentralen Zylinderstutzen 124 besitzt, in den eine Auslaufkappe 125 mit einem zylindrischen Ansatz 126 eingreift, in welche wiederum der Abgabestutzen 127 der Filterpatrone 116 hineinragt. Die Auslaufkappe 125 ist drehbar; zwischen dem Abgabestutzen 127 und dem Wasserauslass 9 ist zudem ein Rückschlagventil 128 angebracht.

Die in der Figur 44 gezeigten Kombination aus Adapter-Kupplung und Filtereinheit ist kompakt gebaut und kann beispielsweise auf Reisen bequem mitgenommen werden, um das Leitungswasser in den bereisten Ländern zu filtern. Die Filterpatrone 116 kann bekannter Art sein, die beispielsweise mit Aktivkohle bestückt ist.

**Bezugszeichenliste**

| | |
|---|---|
| 1 | Adapter-Kupplung |
| 2 | Muffe |
| 3 | Achse |
| 4 | wasserabgebendes Ende |
| 5 | Wasserauslauf |
| 6 | Muffenöffnung |
| 7 | Muffeninnenraum |
| 8 | Sicherungsbügel |
| 9 | Wasserauslass |
| 10 | Freiraum zwischen den Zungen 20 |
| 11 | Freiraum zwischen den Zungen 24 |
| 12 | elastische Dichtung |
| 13 | zentrale Öffnung der Dichtung |
| 14 | Stützeinheit |
| 15 | Außengewinde des Auslaufstutzens |
| 16 | Auslaufstutzen |
| 17 | Außengewinde der Muffe |
| 18 | erste Ringscheibenverstärkung |
| 19 | umlaufender Ringbereich der ersten Ringscheibenverstärkung |
| 20 | Zunge |
| 21 | Rand der Muffe |
| 22 | zweite Ringscheibenverstärkung |
| 23 | umlaufender Ringbereich der zweiten Ringscheibenverstärkung |
| 24 | Zunge |
| 25 | Basis der Zunge der ersten Ringscheibenverstärkung |
| 26 | Dichtring der Dichtung |
| 27 | Basis der Zunge der zweiten Ringscheibenverstärkung |
| 28 | Ausnehmung in der ersten Ringscheibenverstärkung |
| 29 | Ausnehmung in der zweiten Ringscheibenverstärkung |
| 30 | Ringdeckel |
| 31 | Innengewinde |
| 32 | axialer Abschnitt |
| 33 | radialer Abschnitt |
| 34 | zylindrischer Fortsatz |
| 35 | Gewindegang |
| 36 | radial inneres Ende der ersten Ringscheibenverstärkung |
| 37 | radial inneres Ende der zweiten Ringscheibenverstärkung |
| 38 | Einsatz |
| 39 | Öffnung |
| 40 | Verstellring |
| 41 | zylindrischer Abschnitt des Verstellringes |
| 42 | Außengewinde des Verstellringes |
| 43 | Flansch des Verstellringes |
| 44 | Nippel |
| 45 | Steg |
| 46 | Fläche der Zungen der zweiten Ringscheibenverstärkung |
| 47 | Seitenflügel |
| 48 | Verbindungsbereich |
| 49 | Seitenflügel |
| 50 | Ausnehmung |
| 51 | Aufsatz |
| 52 | Flanke, radial äußere |
| 53 | Flanke, radial innere |
| 54 | Spalt |
| 55 | Nut |
| 56 | Bohrung der ersten Ringscheibenverstärkung |
| 57 | Bohrung der zweiten Ringscheibenverstärkung |
| 58 | Bohrung |
| 59 | Stifte |
| 60 | Verbindungsbereich |
| 61 | Nut |
| 62 | Fläche |
| 63 | |
| 64 | Tasche |
| 65 | Tellerboden |
| 66 | Seitenwand der Dichtung 12 |
| 67 | Tellerrand der Dichtung 12 |
| 68 | Flansch |
| 69 | Absatz |
| 70 | freies Ende |
| 71 | freies Ende |
| 72 | Basis der U-Form |
| 73 | Gleitfläche |
| 74 | Perlator |
| 75 | freier Abschnitt |
| 76 | freier Abschnitt |
| 77 | Ausnehmung |
| 78 | Vorsprung |
| 79 | scheibenförmiges Element |
| 80 | Bohrung |
| 81 | Flanke |
| 82 | Kralle |
| 83 | Absatz |
| 84 | Öffnung |
| 85 | Ausnehmung |
| 86 | konusförmiger Zylinder |
| 87 | Flansch |
| 88 | Einfassung |
| 89 | Ventileinsatz |
| 90 | Durchlass |
| 91 | Vorsprung |
| 92 | Bohrung |
| 93 | scheibenförmige Basis |
| 94 | Rand |
| 95 | Stege |
| 96 | Absatz |
| 97 | Zwischenraum |
| 98 | Ausnehmung |
| 99 | Stützring |
| 100 | Balken |
| 101 | Balken |
| 102 | Lasche |
| 103 | Ausnehmung |
| 104 | Nut |
| 105 | Öffnung |
| 106 | Nut |
| 107 | Trennungslinie |
| 108 | Rand |
| 109 | Wulst |
| 110 | Fortsatz |
| 111 | streifenförmiger Bereich, axial innen |
| 112 | streifenförmiger Bereich, axial außen |
| 113 | Rungkanal |
| 114 | Pfeil |
| 115 | Gehäuse |
| 116 | Filterpatrone |
| 117 | Ringscheibe |
| 118 | Öffnung |
| 119 | Ausnehmung |
| 120 | Ausnehmung |
| 121 | Deckel |
| 122 | Boden |
| 123 | Ausstoßvorrichtung |
| 124 | Zylinderstutzen |
| 125 | Auslaufkappe |
| 126 | zylindrischer Ansatz |
| 127 | Abgabestutzen |
| 128 | Rückschlagventil |

## Patentansprüche

1. Adapterkupplung zum lösbaren Aufschieben auf das wasserabgebende Ende (4) eines Wasserauslaufes (5), insbesondere eines Wasserhahnes, unter Herstellung einer wasserdichten Verbindung,
mit einer in etwa haubenförmigen oder glockenförmigen Muffe (2), die in ihrem Muffeninnenraum (7) das wasserabgebende Ende (4) aufnehmen kann und mit einem Wasserauslass (9) versehen ist,
mit einer eine zentrale Öffnung (13) aufweisenden elastischen Dichtung (12), durch deren zentrale Öffnung (13) das wasserabgebende Ende (4) des Wasserauslaufes (5) in den Muffeninnenraum (7) eingeführt werden kann, die durch das eingeführte Ende (4) des Wasserauslaufes (5) aufgeweitet werden und sich an die Außenmantelflache des wasserabgebendes Endes (4) dichtend anlegen kann und die den Muffeninnenraum (7) nach außen fluiddicht abdichtet,
und mit einer Stützeinheit (14), die einen aufweitbaren Trichter bildet, die axial außen von der Dichtung (12) angeordnet ist sowie diese Dichtung (12) stützt,
**dadurch gekennzeichnet,**
**dass** die Stützeinheit (14), eine erste, axial äußere Ringscheibenverstärkung (18) und eine zweite, axial innere Ringscheibenverstärkung (22) aufweist, welche jeweils einen äußeren, umlaufenden und durchgehenden Ringbereich (19, 23) besitzen, von dem sich mehrere, gleichmäßig auf dem Umfang verteilte, an ihrer Basis (25, 27) an dem Ringbereich (19, 23) beweglich angelenkte, voneinander beabstandete Zungen (20, 24) nach radial innen sowie schräg zur Längsachse (3) erstrecken,
die Zungen (20) der ersten Ringscheibenverstärkung (18) und auch die Zungen (24) der zweiten Ringscheibenverstärkung (22) zwischen sich jeweils einen Freiraum (10 bzw. 11) definieren und die Zungen (24) der zweiten Ringscheibenverstärkung (22) in etwa in den Freiräumen (10) der ersten Ringscheibenverstärkung (18) zu liegen kommen und diese Freiräume (10) zumindest teilweise ausfüllen, während die Zungen (20) der ersten Ringscheibenverstärkung (18) in etwa in den Freiräumen (11) der zweiten Ringscheibenverstärkung (22) zu liegen kommen und diese Freiräume (11) zumindest teilweise ausfüllen und
**dass** die Zungen (24 ) der zweiten Ringscheibenverstärkung (22) an ihren beiden sich in etwa radial erstreckenden Seitenrändern jeweils einen Seitenflügel (47, 49) besitzen, die axial innen auf den Zungen (20) der ersten Ringscheibenverstärkung (18) aufliegen.

2. Adapterkupplung nach Anspruch 1,
**dadurch gekennzeichnet,**
**dass** sich die Zungen (20, 24) in axialer Aufsicht nach radial innen konisch verjüngen.

3. Adapterkupplung nach Anspruch 1 oder 2,
**dadurch gekennzeichnet,**
**dass** die Zungen (20) der ersten Ringscheibenverstärkung (18) in etwa Keilform besitzen und an dem spitz zulaufenden Rand des Keiles an dem Ringbereich (23) angelenkt sind und/oder axial innen einen radial verlaufenden, sich in axialer Richtung erstreckenden Steg (45) besitzen

4. Adapterkupplung nach einem der vorhergehenden Ansprüche,
**dadurch gekennzeichnet,**
**dass** die Dichtung (12) in etwa die Form eines runden Tellers besitzt, wobei die zentrale Öffnung (13) im Zentrum des Tellerbodens (65) ausgebildet ist, und die Seitenwand (66) des Tellers schräg zur Längsachse (3) verläuft und an den Zungen (24) bzw. Seitenflügeln (47,49) anliegt.

5. Adapterkupplung nach Anspruch 4,
**dadurch gekennzeichnet,**
**dass** die Dichtung (12) radial außen im Bereich des Tellerbodens (65) gleichmäßig auf dem Umfang verteilte, sich radial erstreckende, radial innen offene Taschen (64) besitzt, deren Anzahl der Anzahl der Zungen (24) der zweiten Ringscheibenverstärkung (22) entspricht ,
**dass** die Zungen (24) der zweiten Ringscheibenverstärkung (22) in der Nähe ihres radial inneren Endes (37) einen sich in etwa nach axial innen sowie in etwa in axialer Richtung erstreckenden Nippel (44) aufweisen, dass auf jeden Nippel (44) ein bügelförmig gebogener Aufsatz (51) aufgesteckt ist, wobei der Nippel (44) in eine Ausnehmung (50) im Aufsatz (51) eingreift, und
**dass** die Aufsätze (51) radial innen sowie radial außen von der Ausnehmung (50) jeweils eine Flanke (52, 52) besitzen, von denen die radial äußere Flanke (52) in die dazugehörige, gegenüberliegende Tasche (64) der Dichtung (12) eingreift.

6. Adapterkupplung nach Anspruch 5 ,
**dadurch gekennzeichnet,**
**dass** die Zungen (24) der zweiten Ringscheibenverstärkung (22) an ihrem radial inneren Ende (37) jeweils eine Fläche (46) besitzen, gegen die eine Fläche (63) an der radial inneren Flanke (53) des Aufsatzes (51) anliegt, und dass diese Flächen (46) der Zungen (24) zusammen eine Art Zylinder oder einen sich nach innen erweiternden Trichter bilden.

7. Adapterkupplung nach Anspruch 6 ,
**dadurch gekennzeichnet,**
**dass** die Fläche (46) der Zungen (24) der zweiten Ringscheibenverstäzkung (22) in zwei Teilflächen (46', 46") und die Fläche (63) der Aufsätze (51) in zwei Teilflächen (63', 63") unterteilt sind und dass die einander gegenüberliegenden Teilflächen (46', 63' bzw. 46", 63") aneinander anliegen.

8. Adapterkupplung nach einem der Ansprüche 5 bis 7,
**dadurch erhältlich,**
dass die Aufsätze (51) mit ihrer radial äußere Flanke (52) in die Taschen (64) der Dichtung (12) eingesetzt werden und die Dichtung (12) danach derart auf die zweite Ringscheibenverstärkung (22) aufgesetzt wird, dass die Nippel (44) in die Ausnehmungen (50) der Aufsätze (51) eingeschoben werden und
die Aufsätze (51) anschließend unter Berührungskontakt der gegenüberliegenden Flächen (46, 63) fest mit den dazugehörigen Zungen (24) verbunden werden, insbesondere durch Verschmelzen.

9. Adapterkupplung nach einem der vorhergehenden Ansprüche,
**dadurch gekennzeichnet,**
**dass** die zentrale Öffnung (13) der Dichtung (12) von einem Dichtring (26) eingefasst wird,

10. Adapterkupplung nach einem der vorhergehenden Ansprüche,
**dadurch gekennzeichnet,**
**dass** im Muffeninnenraum (7) ein U-förmiger Sicherungsbügel (8) aus einem flachbandartigen Material mit einem rechteckigen Materialquerschnitt angebracht ist, die beiden freien Enden (70, 71) der U-Form der Muffenöffnung (6) gegenüberliegend an der Muffe (2) befestigt sind, die Basis (72) der U-Form vor der zentralen Öffnung (13) der Dichtung (12) zu liegen kommt und an der Basis (72) eine schräg zur Längsachse (3) verlaufende Gleitfläche (73) angeordnet ist, die insbesondere in etwa halbkuppelförmig ist.

11. Adapterkupplung nach einem der vorhergehenden Ansprüche,
**dadurch gekennzeichnet,**
**dass** im Wasserauslass (9) ein Rückschlagventil angebracht ist.

12. Adapterkupplung nach einem der vorhergehenden Ansprüche,
**dadurch gekennzeichnet,**
**dass** sie mit einer Wasser-Filtereinheit kombiniert ist.

## Claims

1. Adapter coupling for removably sliding onto the water-discharging end (4) of a water outlet (5), in particular a water tap, while establishing a watertight connection to an approximately dome-shaped or bell-shaped sleeve (2) which can receive the water-discharging end (4) in its inner sleeve space (7) and is provided with a water drain (9),
comprising an elastic seal (12) having a central opening (13) through which the water-discharging end (4) of the water outlet (5) may be introduced into the inner sleeve space (7), and which central opening (13) may be expanded by the introduced end (4) of the water outlet (5) and may rest against the outer surface of the water-discharging end (4) in a sealing manner and seal the inner sleeve space (7) to be fluid-tight to the exterior,
and comprising a supporting unit (14) which forms an expandable funnel and is arranged axially external to said seal (12) and supports said seal (12),
**characterized in that**
the supporting unit (14) has a first axially outer annular disk reinforcement (18) and a second axially inner annular disk reinforcement (22), each comprising an outer peripheral and continuous annular area (19, 23) from which a plurality of tongues (20, 24) extend radially inward and obliquely to the longitudinal axis (3) and are spaced apart from each other in even distribution on the periphery and moveably articulated to the annular area (19, 23) at their bases (25, 27),
the tongues (20) of the first annular disk reinforcement (18) and also the tongues (24) of the second annular disk reinforcement (24) define a free space (10 or 11) between them, and the tongues (24) of the second annular disk reinforcement (22) essentially situate in the free spaces (10) of the first annular disk reinforcement (18) and at least partially fill said free spaces (10), whereas the tongues (20) of the first annular disk reinforcement (18) essentially situate in the free spaces (11) of the second annular disk reinforcement (22) and at least partially fill said free spaces (11), and
the tongues (24) of the second annular disk reinforcement (22) each comprise, on both of their essentially radially extending lateral edges, a lateral wing (47, 49) resting axially inward upon the tongues (20) of the first annular disk reinforcement (18).

2. Adapter coupling according to claim 1,
**characterized in that,**
in an axial plan view, the tongues (20, 24) taper radially inwards.

3. Adapter coupling according to claim 1 or claim 2,
**characterized in that**
the tongues (20) of the first annular disk reinforcement (18) essentially have a wedge shape and are articulated to the annular area (23) at the tapered edge of the wedge and/or have a radially running web (45) extending in the axial direction axially inside thereof.

4. Adapter coupling according to any one of the preceding claims,
**characterized in that**
the seal (12) has the approximate shape of a round disk, wherein the central opening (13) is formed in the center of the disk base (65), and the side wall of the disk runs obliquely to the longitudinal axis (3) and rests against the tongues (24) or lateral wings (47, 49), respectively.

5. Adapter coupling according to claim 4,
**characterized in that,**
radially outside in the area of the disk base (65), the seal (12) has radially extending pockets (64) radially open to the interior and evenly distributed on the periphery, the number of which corresponds to the number of tongues (24) of the second annular disk reinforcement (22),
the tongues (24) of the second annular disk reinforcement (22) have a nipple (44) extending essentially in the axial direction and essentially axially inward,
a yoke (51) bent in the shape of a bracket is fit onto each nipple (44), wherein the nipple (44) engages into a recess (50) in the yoke (51), and
the yokes (51), radially inside and radially outside of the recess (50), each have a shoulder (52, 52), the radially outer shoulder (52) thereof engaging into the associated opposite pocket (64) of the seal (12).

6. Adapter coupling according to claim 5,
**characterized in that**
the tongues (24) of the second annular disk reinforcement (22), each have a face (46) at their radially inner end (37), against which rests a face (63) of the radially inner shoulder (53) of the yoke (51), and that said faces (46) of the tongues (24) together form a kind of cylinder or a funnel expanding inward.

7. Adapter coupling according to claim 6,
**characterized in that**
the face (46) of the tongues (24) is divided into two partial faces (46', 46"), and the face (63) of the yokes (51) is divided into two partial faces (63', 63"), and that the partial faces (46', 63' and 46", 63", respectively) situated opposite each other are adjacent to one another.

8. Adapter coupling according to any one of the claims 5 to 7,
which may be **obtained**
by inserting the yokes (51) with their radially outer shoulder (52) into the pockets (64) of the seal (12), and by then fitting the seal (12) onto the annular disk reinforcement (22) in such a manner that the nipples (44) are inserted into the recesses (50) of the yokes (51), and
by subsequently connecting the opposite faces (46, 63) to fixedly contact the associated tongues (24), in particular by fusion.

9. Adapter coupling according to any one of the preceding claims,
**characterized in that**
the central opening (13) of the seal (12) is enclosed by a sealing ring (26).

10. Adapter coupling according to any one of the preceding claims,
**characterized in that**
a U-shaped securing bracket (8) made of a flat ribbon-like material having a rectangular material cross-section is fit inside the inner sleeve space (7), both of the free ends (70,71) of the U-shape of the sleeve opening (6) are fixed to the sleeve (2) in opposite relationship, the base (72) of the U-shape situates in front of the central opening (13) of the seal (12), and a sliding face (73), in particular essentially in the shape of a semi-dome, is arranged extending obliquely to the longitudinal axis (3).

11. Adapter coupling according to any one of the preceding claims,
**characterized in that**
a check valve is positioned in the water drain (9).

12. Adapter coupling according to any one of the preceding claims,
**characterized in that**
same is combined with a water filter unit.

## Revendications

1. Raccord adaptateur destiné à être placé de manière amovible sur l'extrémité de distribution d'eau (4) d'une sortie d'eau (5), en particulier d'un robinet d'eau, de façon à créer une liaison étanche à l'eau avec un manchon (2) ayant sensiblement la forme d'une calotte ou d'une cloche, lequel peut recevoir l'extrémité de distribution d'eau (4) dans son espace intérieur de manchon (7) et est pourvu d'un écoulement d'eau (9),
comprenant une garniture d'étanchéité élastique (12) présentant une ouverture centrale (13) et par l'ouverture centrale (13) de laquelle l'extrémité de distribution d'eau (4) de la sortie d'eau (5) peut être introduite dans l'espace intérieur de manchon (7), et qui peut être évasée par l'extrémité introduite (4) de la sortie d'eau (5) et se poser de manière étanche contre la surface périphérique extérieure de l'extrémité de distribution d'eau (4) et qui assure l'étanchéité aux fluides de l'espace intérieur de manchon (7) par rapport à l'extérieur,
et comprenant une unité de support (14) formant un entonnoir évasable, disposée du côté axialement extérieur de la garniture d'étanchéité (12) et supportant cette garniture d'étanchéité (12)
**caractérisé en ce que**
l'unité de support (14) comprend un premier élément de renforcement annulaire (18) axialement extérieur et un deuxième élément de renforcement annulaire (22) axialement intérieur, lesquels présentent chacun une zone annulaire (19, 23) extérieure, périphérique et continue à partir de laquelle plusieurs languettes (20, 24) espacées entre elles, articulées à la zone annulaire (19, 23) au niveau de leur base (25, 27) et réparties uniformément sur la circonférence s'étendent radialement vers l'intérieur ainsi qu'obliquement par rapport à l'axe longitudinal (3),
annulaire (22) définissent entre elles un espace libre (10 et 11 respectivement) et les languettes (24) du deuxième élément de renforcement annulaire (22) viennent sensiblement reposer dans les espaces libres (10) du premier élément de renforcement annulaire (18) et remplissent au moins partiellement ces espaces libres (10), tandis que les languettes (20) du premier élément de renforcement annulaire (18) viennent sensiblement reposer dans les espaces libres (11) du deuxième élément de renforcement annulaire (22) et remplissent au moins partiellement ces espaces libres (11), et
**en ce que** les languettes (24) du deuxième élément de renforcement annulaire (22) comportent, sur chacun de leurs deux bords latéraux s'étendant de manière sensiblement radiale, une aile latérale (47, 49) qui repose du côté axialement intérieur sur les languettes (20) du premier élément de renforcement annulaire (18).

2. Raccord adaptateur selon la revendication 1,
**caractérisé en ce que**
les languettes (20, 24), en vue axiale, s'amincissent coniquement vers l'intérieur en sens radial.

3. Raccord adaptateur selon la revendication 1 ou 2,
**caractérisé en ce que**
les languettes (20) du premier élément de renforcement annulaire (18) ont sensiblement une forme de coin et sont articulées à la zone annulaire (23) au niveau du bord effilé du coin et/ou comportent du côté axialement intérieur un méplat (45) disposé radialement et s'étendant en sens axial.

4. Raccord adaptateur selon l'une des revendications précédentes,
**caractérisé en ce qu**
la garniture d'étanchéité (12) présente sensiblement la forme d'une assiette ronde, l'ouverture centrale (13) étant constituée au centre du fond (65) de l'assiette, et la paroi latérale (66) de l'assiette étant inclinée par rapport à l'axe longitudinal (3) et reposant sur les languettes (24) ou ailes latérales (47, 49).

5. Raccord adaptateur selon la revendication 4,
**caractérisé en ce qu**
la garniture d'étanchéité (12) comporte du côté radialement extérieur, au niveau du fond (65) de l'assiette, des poches (64) ouvertes du côté radialement intérieur, s'étendant radialement et réparties uniformément sur la circonférence, dont le nombre correspond au nombre de languettes (24) du deuxième élément de renforcement annulaire (22),
**en ce que** les languettes (24) du deuxième élément de renforcement annulaire (22) présentent, à proximité de leur extrémité radialement intérieure (37), un nipple (44) s'étendant sensiblement vers l'intérieur axialement ainsi que sensiblement en sens axial
**en ce qu'**une rehausse (51) cintrée en forme d'étrier est enfichée sur chaque nipple (44), le nipple (44) prenant dans une réservation (50) ménagée dans la rehausse (51), et
**en ce que** les rehausses (51) comportent, à l'intérieur radialement ainsi qu'à l'extérieur radialement par rapport à la réservation, chacune un flanc (52, 52), le flanc radialement extérieur (52) prenant dans la poche (64) associée et opposée de la garniture d'étanchéité (12).

6. Raccord adaptateur selon la revendication 5,
**caractérisé en ce que**
les languettes (24) du deuxième élément de renforcement annulaire (22) comportent à leur extrémité radialement intérieure (37) chacune une surface (46) contre laquelle repose une surface (63) sur le flanc radialement intérieur (53) de la rehausse (51), et **en ce que** ces surfaces (46) des languettes (24) forment ensemble une sorte de cylindre ou un entonnoir qui s'évase vers l'intérieur.

7. Raccord adaptateur selon la revendication 6,
**caractérisé en ce qu**
la surface (46) des languettes (24) est divisée en deux surfaces partielles (46', 46") et la surface (63) des rehausses (51) est divisée en deux surfaces partielles (63', 63") et **en ce que** les surfaces partielles qui sont opposées (46', 63' et 46", 63") reposent l'une contre l'autre.

8. Raccord adaptateur selon l'une des revendications 5 à 7,
**caractérisé en ce qu**
les rehausses (51) sont insérées avec leur flanc radialement extérieur (52) dans les poches (64) de la garniture d'étanchéité (12) et la garniture d'étanchéité (12) est ensuite placée de telle façon sur le deuxième élément de renforcement annulaire (22) que les nipples (44) se placent dans les réservations (50) des rehausses (51) et
**en ce que** les rehausses (51) sont ensuite reliées fermement aux languettes associées (24), en particulier par fusion, les surfaces opposées (46, 63) se trouvant en contact.

9. Raccord adaptateur selon l'une des revendications précédentes,
**caractérisé en ce qu**
l'ouverture centrale (13) de la garniture d'étanchéité (12) est cerclée par une bague d'étanchéité (26).

10. Raccord adaptateur selon l'une des revendications précédentes,
**caractérisé en ce que**
un étrier de sûreté (8) en forme de U, constitué d'un matériau de type ruban présentant une section rectangulaire, est disposé dans l'espace intérieur de manchon (7), les deux extrémités libres (70, 71) de la forme en U de l'ouverture de manchon (6) étant fixées à l'opposé sur le manchon (2), la base (72) de la forme en U venant reposer devant l'ouverture centrale (13) de la garniture d'étanchéité (12), et une surface de glissement (73) inclinée par rapport à l'axe longitudinal (3), qui est en particulier sensiblement en forme de demi-dôme, étant disposée à la base (72).

11. Raccord adaptateur selon l'une des revendications précédentes,
**caractérisé en ce que**
un clapet anti-retour est disposé dans l'écoulement d'eau (9).

12. Raccord adaptateur selon l'une des revendications précédentes,
**caractérisé en ce**
**qu'**il est combiné à une unité de filtration d'eau.
